(19) Europäisches Patentamt
European Patent Office
Office européen des brevets

(11) **EP 1 092 125 B1**

(12) # EUROPEAN PATENT SPECIFICATION

(45) Date of publication and mention
of the grant of the patent:
**09.11.2005 Bulletin 2005/45**

(51) Int Cl.⁷: **G01B 11/03**, B25J 9/16,
G05B 19/401, G01S 17/66

(21) Application number: **99933620.9**

(22) Date of filing: **29.06.1999**

(86) International application number:
**PCT/US1999/014815**

(87) International publication number:
**WO 2000/000784 (06.01.2000 Gazette 2000/01)**

(54) **VECTOR MEASUREMENT FOR COORDINATE MEASURING MACHINE**

VEKTORMESSEN FÜR KOORDINATENMESSGERÄT

MESURE D'UN VECTEUR POUR MACHINE DE MESURE DE COORDONNEES

(84) Designated Contracting States:
**CH DE FR GB IT LI**

(30) Priority: **30.06.1998 US 91237 P**
**03.03.1999 US 122695 P**

(43) Date of publication of application:
**18.04.2001 Bulletin 2001/16**

(73) Proprietor: **Optodyne, Inc.**
**Compton, CA 90220 (US)**

(72) Inventor: **WANG, Charles**
**Compton, CA 90220 (US)**

(74) Representative: **Müller, Frank Peter**
**Müller Schupfner**
**Patentanwälte**
**Bavariaring 11**
**80336 München (DE)**

(56) References cited:
WO-A-93/08449          US-A- 4 763 276
US-A- 4 945 501        US-A- 5 408 758

• SCHUSSLER H -H: "VERMESSUNG VON ROBOTERN UND GROSSEN KOORDINATENMESSGERATEN MITTELS AXIALER UND RAUMSCHRAGER LASERINTERFEROMETER-MESSUNGEN" TECHNISCHES MESSEN TM, vol. 55, no. 10, 1 January 1988 (1988-01-01), pages 377-382, XP000038147 ISSN: 0171-8096
• G. LIOTTO AND C. P. WANG: "Laser Doppler Displacement Meter (LDDM) Allows new Diagonal " PROCEEDINGS OF LAMDAMAP '97, 15 July 1997 (1997-07-15), pages 187-194, XP002118747 Huddersfield, England cited in the application

**Description**

**Related Application:**

This application is based upon U.S. Provisional Application No. 60/691237, filed June 30, 1998 and U.S. Provisional Application No. 60/122, 695, filed March 3, 1999.

**Background of the Invention**

The performance or accuracy of a CNC (computer numerical control) machine tool or a coordinate measuring machine (CMM) is determined by the linear displacement errors, straightness errors, squareness errors, angular errors and non-rigid body errors of the machine tool spindle movement (to generalize the moving body which could be something other than a machine tool spindle the term "body" will be often used instead of spindle). A complete measurement of these errors is very complex and time consuming. Diagonal measurements of the body movement taken continuously along the diagonals of a volumetric space have been recommended for a quick check on the volumetric performance of the machine. However, with this measurement system there is not enough information to identify the error sources for accurate machine quality assessment and error correction.

The characterization of a machine tool body movement is very complex. The machine tool body movement errors are referred to broadly as linear error, angular errors, and squareness errors. The linear errors break down into what are referred to as linear displacement errors and vertical straightness and horizontal straightness errors. Angular errors include pitch, yaw and roll errors. Thus for each of the X, Y and Z axis of motion, there are 6 recognized errors, 3 linear, and 3 angular errors plus 1 squareness error. Thus, for a 3 axis machine, there are a total of 21 of these error.

For a non-rigid body there are many more errors. Existing methods of measuring these errors for calibration and accuracy evaluation using laser interferometer and other means has been very difficult and time consuming until the present invention was developed.

The machine accuracy can be improved by measuring all the above referred to errors and then compensating these errors, providing that the machine tool body movement is repeatable. The key is how to measure these errors accurately and quickly. The inferior previous methods for measuring these errors include the methods disclosed by G. Zhang, R. Ouyang, B. Lu, R. Hocken, R. Veale, and A. Donmes, in an article entitled "A displacement method for machine geometry calibration", Annals of the CIRP Vol. 37, No. 1. 1988, pp 515-518, and W.L. Beckwith,Jr. in U.S. Patent No. 4,939,678, grated July 3, 1990 entitled "Method for calibration of coordinate measuring Machine". These errors for calibration and accuracy evaluation using laser interferometer and other means has been very difficult and time consuming until the present invention was developed.

One example of a laser interferometers which have been used for measuring linear displacement is, for example, model HP 5529, manufactured by Hewlett-Packard, Palo Alto, California. The straightness accuracy of the body movement using these prior measurement techniques can be measured, for example, by a laser interferometer using angular optics or a quad-detector as, for example, model MCV-3000, manufactured by Optodyne, Inc., of Compton, California. The prior art squareness measurements and these other measurements are carried out by directing a laser beam parallel to a selected diagonal of the space in which the body involved can be moved (referred to hereafter as the volumetric space) and the body is moved intermittently along the diagonal as measurements are taken. This process is duplicated for at least one other diagonal and preferably all four diagonals of this space. These laser interferometer diagonal measurements are recommended in the ASME B5.54 standard (section 5.9.2 in Methods for Performance Evaluation of Computer Numerically Controlled Machining Centers, ASME B5.54-1992, American Society of Mechanical Engineers, New York, NY) for the check of volumetric performance.

These intermittent diagonal measurement techniques have heretofore been assumed to be a quick check of the machine accuracy. This was because the diagonal measurement is sensitive to all the errors. Hence, if the diagonal measurement shows the error is small, good machine accuracy has been assured. On the other hand, if the intermittent diagonal measurement shows the error is large, it has been rather difficult to determine the cause of this large error As above indicated, these prior art techniques are time consuming, particularly if all of the errors are measured. Thus, they need as many as 18 separate setups and measurements respectively for the displacement, straightness, angular and squareness measurements. This can take two of three days to complete which can result in substantial undesired down-time of the machine involved.

Disclosed here is a new measurement method, referred to herein as a vector measurement method. It can measure all these errors, using a simple and portable laser interferometer or a laser Doppler displacement meter (LDDM), in 4 settings and within a few hours. Also, this method is so simple and easy to carry out that in-house personnel of a typical machine tool shop can readily take the measurements and then compensate for the errors involved.

## EP 1 092 125 B1

**Summary of the Invention**

The present invention involves apparatus and a method of using such apparatus, according to present claim 12 and present claim 1, respectively, which provides a vector measurement technique which enables the movement error components above described to be determined more accurately and efficiently than the prior art. It does so by directing a beam of reflectable energy in a direction non-parallel to the direction of movement of the body along paths having measuring points. (In contrast, the prior art error measurement techniques moved the body in the same direction, that is, along the beam path.) A reflector reflects the energy back to a measuring apparatus which measures the distance between the apparatus and the reflector at these different measuring points. These reflector distance measurements vary with the body position and they are then compared with predetermined ideal reflector distances measurements for these points on the assumption that the body is moved without error to these points by the computer control system involved. This comparison produces reflector distance error values from which the actual body position error components described above can be computed.

Because the prior art error measurement technique moved the body along the beam path and took its measurements at only points along the path, it cannot directly measure the straightness and other error components in directions perpendicular to the direction of body movement.

As in the prior art, the vector measurement technique of the present invention preferably uses a laser beam reflector and a measuring apparatus which measures the distance between the measuring apparatus and the point on the reflector where the laser beam is reflected. However, the broad aspects of the invention encompass the use of reflectable energy other than laser beam energy. Thus it includes the use of such energy sources as radar frequency or other electromagnetic energy sources or an acoustic energy source with measuring apparatus which measures the distance between the source of such energy and the point where a beam of such energy is reflected by a reflector back to the measuring apparatus.

Also, while it is highly preferred that the body to be moved carries the reflector and the measuring apparatus is stationary and directs a beam of the energy involved along a diagonal (or other less preferred direction) in the two or three dimensional space in which the body is moved, the positions of the apparatus and the reflector could be reversed without deviating from the broader aspects of the invention.

In the preferred invention summary now to be made and in the drawings and the description thereof to follow, a much larger than normal laser beam reflector is carried by the body being moved and a stationary laser measuring apparatus directs the laser beam along a diagonal of a three dimensional space. The reflector is sufficiently large that it will intercept the laser beam even when the body is spaced from and is moved along paths which extend a substantial distance from the diagonal. The body is preferably moved sequentially in groups of three repeated incremental steps along the X, Y and Z axes. The first step in each group begins on a segment of the diagonal involved and the body is directed to move a given distance parallel to the first of the axes involved. The laser measuring apparatus then measures and records the actual distance between the apparatus and the point on the laser beam reflector which reflects the laser beam on the selected diagonal. The next step in each group is to direct the body to move a given distance parallel to one of the other two axes a distance where the body can be returned to the end of the segment involved when the body is moved parallel to the third axis involved if the body is ideally moved without any error components. A similar distance measurement is taken and recorded. The last step in each group is to move the body parallel to the third axis to return it to or near the end of the segment involved. This same xyz axes sequence of movement is then repeated until all of the diagonal segments are traversed.

If the body was moved exactly the desired distance each step of the process as directed by the computer program involved then there is no error in the body movement and the distance measurements along the diagonal will confirm this. However, there is almost always some error in the movement distances which will be reflected in the laser beam reflection point distances. Each error type will have an effect in these laser apparatus measured distances. The present invention then desirably calculates the various error components from these laser apparatus measurements and error compensation tables can then be produced which are used to generate control signals which will cause the X, Y and Z axis motor controllers to move the body more accurately as it performs its assigned function.

As compared to the prior art laser measurement technique which moves the body along the same diagonal along which the laser beam is directed, the present invention collects 3 times more data. Furthermore, the data collected after each incremental movement along a given axis is due only to that movement and so that the error sources involved in each of these movements can be separated.

If backlash errors are to be considered, then after all of the measurements are taken as the body involved is moved in the selected sequence from one end of a selected diagonal to the other, the body is then moved with respect to this diagonal and the above mentioned measurements and computations taken as the body is moved in the reverse direction following the similar paths the body was just moved to each point. This requires, of course, the movement of the body along the X, Y and Z axes in the reverse order.

The steps just described carried out along a first selected diagonal then should be carried out along at least another diagonal using the same axis movement sequence as before when the volumetric space is a greatly elongated one (that when a large aspect ratio is involved). The process described is preferably repeated again for at least one more and preferably for all of the diagonals. Since each set of body diagonal measurements for a given sequence produces 3 sets of data, there are 12 sets of data which are collected when all four diagonals are involved in the measurements made. This produces enough data to determine the 3 displacement errors, 6 straightness errors, and 3 squareness errors. If only two diagonals are involved, there is enough data to determine 3 linear displacement and 3 straightness errors.

Part of this improved sequential diagonal measurement technique based on a single sequential three axis movement and data collection method is disclosed in an article of G. Liotto and C.P. Wang, entitled Laser Doppler Displacement Meter (LDDM) Allows new Diagonal Measurement for Large Aspect Ratio Machine Tool easily and accurately in the Proceedings of LAMDAMAP '97, University of Huddersfield, Queensgate, Huddersfield, England, 15-17 July, 1997. That article discloses features of the preamble of present claim 1. The present application adds a further improvement in that the measurements and calculations above described are made with more than 2 diagonals and more than one axis movement sequence. Thus, if one of the sequences was XYZ, the process described above is repeated for at least one more or two added sequences and preferably for all six sequences. Carrying out the process described for three different sequences (e.g. XYZ, YZX and ZXY) over three diagonals will generate 27 sets of data which is enough to determine the rigid body errors (both linear, angular and squareness errors, a total of 21 errors). If the above method is carried out for all six of the possible sequences (i.e. YZY, YYZ and ZYX in addition to the above) for all four diagonals, there will be generated 48 sets of data is enough to solve all the linear errors, angular errors and some non-rigid body errors, which could be used to determine both rigid and non-rigid body errors. The same vector measurement method can also be applied to non-conventional machines such as 4 or more axes machines, non-orthogonal motion machines, hexapod machines and parallel linkage machines.

As above indicated, the present invention uses laser measurement equipment which uses unusually large laser beam reflectors which will intercept the laser beam directed along a diagonal of the volumetric space involved, despite the fact that the body carrying the reflector moves substantial distances laterally of the diagonal involved. If a corner cube or retroreflector is used, conventionally sized reflectors are too small for this purpose. For large lateral deviations, a flat reflector is preferably used as the laser beam reflector. Another aspect of the present invention involves the manner in which the errors determined by the above described aspects of the invention are used to compensate for the errors computed thereby so that the machine tool involved will operate more accurately. These computed errors are used to form compensation tables which can be incorporated into the X, Y and Z axis motor controllers which have to be specially programmed to use these tables. One aspect of the present invention is to use an interpolator software with all the measured errors to provide error compensation signals for the controller which can therefore be a conventional controller.

## Brief description of the drawings

Fig. 1 shows a volumetric space in which a body is to be moved and the polar and Cartesian coordinates of a body in a given position P in that space.

Fig. 2 shows the volumetric space in which a body is to be moved in accordance with the invention in incremental X, Y and Z axis movements along various segments of a diagonal r of that space.

Fig. 3 is a block diagram showing a motor controller in block form and three motors controlled thereby to drive the tool bit or other body being moved along the X, Y and Z axes.

Figs. 4a and 4b respectively show the body movement paths identified by letters of the movement of the body controlled by a software program operating the motor controller of Fig. 3 and as would be viewed above the XY plane.

Fig. 4c is a two dimensional view viewed from above the XY plane of the volumetric space in which the body is moved a fixed distance along the X axis and illustrating the desired and actual positions at which the laser beam reflector on the body intercepts the laser beam along two opposite diagonals of the space and the position error components in the X and Y axis directions resulting from the erroneous actual position thereof.

Figs. 5a, 5b and 5c show examples of data analysis obtained from the error measurements obtained by the present invention. The ΔR is the measured position error in the diagonal direction. The subscript X, Y, and Z indicating the measured position error due to the X-axis, Y-axis, and Z-axis movement respectively, as a tool bit is moved respectively parallel to the X, Y and Z axes along the various lettered identified paths associated with the various segments of the diagonal shown in Fig. 2.

Fig. 6 shows the volumetric space in which a tool bit or other body is to be moved by the present invention along a diagonal of that space in X, Y and Z axis directed movements sequence 1 (single arrows). Also shown in the figure are the sequence 2 (double arrows), Y, Z, and X, and the sequence 3 (triple arrows), Z, X, and Y. The figure showing only one segment S 1 of the diagonal.

Fig. 7 is similar to Fig. 6 but shows body movement along 3 diagonal segments S1, S2, and S3.

Figs. 8a and 8b are block diagrams which respectively illustrate the program flow diagrams of the software which controls the movement of the body in axis movement sequences XYZ and ZXY from one end of a given diagonal to the other opposite the 5 segments thereof illustrated in Fig. 2.

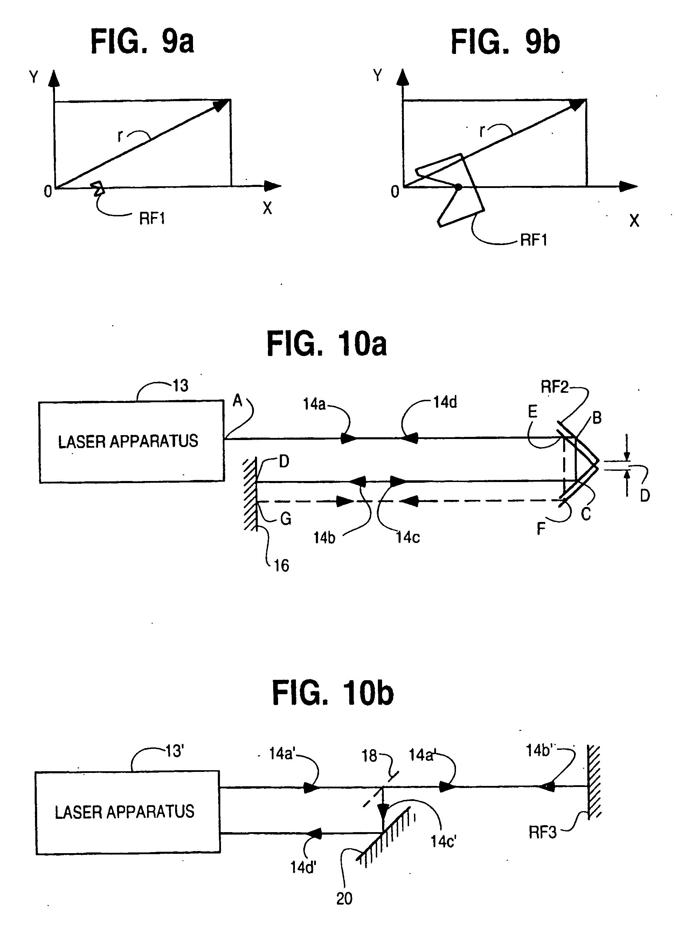

Figs. 9a is a plan view of the volumetric space in which the body can be moved and looking toward the XY plane, the Figure showing the initial segments of the diagonal along which the body position error measurements are taken in the practice of the invention after each incremental X, Y and Z axis movement with respect to such diagonal. The Figure also shows the laser beam of the interferometer which makes such measurements directed along such diagonal and an inoperable conventional sized retroreflector carried by such body and of such small size as to not intercept the laser beam when the body is initially moved the required short distance along the X axis.

Fig. 9b is a view similar to Fig. 9a except that the body carries a relatively large retroreflector which intercepts the laser beam for the incremental X, Y and Z axis directional movements of the body.

Fig. 10a shows a double pass optical arrangement for a single aperture laser interferometer system which is preferably used to carry out the position error measurements of the present invention.

Fig. 10b shows an optical arrangement to convert a commercially available double aperture laser interferometer system using a typically small corner cube retroreflector not useable with the present invention to one so useable when the corner cube is replaced by a flat mirror.

Fig. 10c shows a single aperture laser measuring system with an optical arrangement using a flat-mirror as target and an optical adapter to convert a collimated laser beam to a small diameter and divergent beam.

Fig. 11 a shows a block diagram of a conventional error compensation scheme. Here the compensation file is a lookup table for the controller based on the errors measured by the vector method.

Fig. 11b shows a block diagram of a new error compensation scheme. Here the compensation file is a lookup table for the machine command interpolation software.

Fig. 12 shows a variation of the present invention where the laser beam deflector is stationary and the laser measuring apparatus is mounted on the tool spindle or other body to be moved.

**Basic Theory to Determine Linear, Angular and Squareness Errors**

1) Motion of a Rigid Body

The general motion of a rigid body along one axis can be described by 6 degrees of freedom. These are one linear, 2 straightness, pitch, yaw and roll. For a 3-axis machine, there are 18 degrees of freedom plus 3 squareness, a total of 21 degrees of freedom.

2) Assumptions

To simplify the analysis, the following assumptions are made:
The motion is repeatable to within certain uncertainty.
The motion and position errors can be superpositioned, i.e. the position error is much smaller than the travel distance.
For most machine tools or CMMS, the above assumptions are a good approximation.

3) Body Diagonal Motion

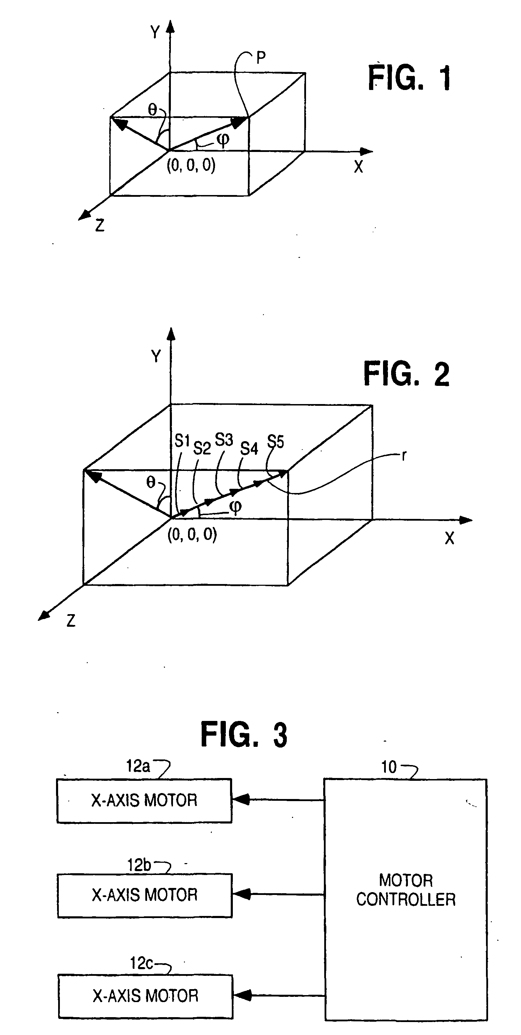

A body diagonal motion can be expressed as from the origin (0,0,0) to a diagonal point P (X, Y. Z) as shown in Fig 1.
The distance between 0 to P is

$$R = \sqrt{x^2 + y^2 + z^2}$$

Also, in polar coordinates,

X =    Rcos$\phi$
Y =    Rsin$\phi$sin$\theta$
Z =    Rsin$\phi$cos$\theta$

4) Measurement Along Body Diagonal

Assume the measurement is along the R-direction, which is a function of X, Y, and Z. then the deviation in R can be expressed as the sum of deviation in R due to X-axis motion, due to Y-axis motion and due to Z-axis motion. Hence.

$$\frac{\Delta R}{R} = \left(\frac{\Delta R}{R}\right)_x + \left(\frac{\Delta R}{R}\right)_y + \left(\frac{\Delta R}{R}\right)_z \qquad (1)$$

5) Volumetric Error Analysis

For each axis of motion, there are linear position errors in X, Y, and Z-direction, pitch yaw and roll angles. Hence, for X-axis movement,

  Linear position error $\delta_x(x)$
  Straightness errors $\delta_y(x)$, $\delta_z(x)$
  Pitch, Yaw and Roll $\alpha_y(x)$, $\alpha_z(x)$, $\alpha_x(x)$
Similarly for Y-axis and Z-axis movement,
Linear position errors $\delta_y(y)$, $\delta_z(z)$
Straightness errors $\delta_x(y)$, $\delta_z(y)$, $\delta_x(z)$, $\delta_y(z)$

Pitch, Yaw and Roll angles $\alpha_x(y)$, $\alpha_z(y)$, $\alpha_y(y)$, $\alpha_x(z)$, $\alpha_y(z)$, $\alpha_z(z)$ The squareness between axes is

  $\theta_{xy}$, $\theta_{yz}$, $\theta_{zx}$

As shown by Schaltshik (R. Schaltschik, "The components of the volumetric accuracy", Annals of tl-ie CIRP Vo1.25, No.1, 1977, pp223-228) and Zhang (G.Zhang, R. Ouyang, B. Lu, R. Hocken, R. Veale, and A. Donmez, "A displacement method for machine geometry calibration", Annals of the CIRP Vol. 37, No. 1, 1988, pp515-518), the volumetric error is the difference between the actual spindle position and the true spindle position. The true spindle position can be calculated by the coordinate

$$P_x = \delta_x(x) + z \cdot \alpha_y(x) - y \cdot [\alpha_z(x) + \theta_{xy}] + \delta_x(y) + z \cdot [\alpha_y(y) - \theta_{xz}] + \delta_x(z)$$

$$P_y = \delta_y(x) - z \cdot [\alpha_x(x) + \theta_{yz}] + \delta_y(y) - z \cdot \alpha_x(y) + \delta_y(z)$$

$$P_z = \delta_z(x) - y \cdot \alpha_x(x) + \delta_z(y) + \delta_z(z) \qquad (2)$$

transformations of each axis movement. For a machine type FXYZ, the position errors can be expressed as

Where $P_x$, $P_y$ and $P_z$ are position errors in the $x$, $y$ and $z$ direction respectively.

Hence Equation (1) becomes

$$\left(\frac{\Delta R}{R}\right)_x = \frac{x^2}{R^2}\cdot\left[\frac{\delta_x(x)-y\cdot[\alpha_z(x)+\theta_{xy}]+z\cdot\alpha_y(x)}{x}\right]+\frac{x\cdot y}{R^2}\cdot\left[\frac{\delta_y(x)-z\cdot[\alpha_x(x)+\theta_{yz}]}{x}\right]$$

$$+\frac{x\cdot z}{R^2}\cdot\left[\frac{\delta_z(x)-y\cdot\alpha_x(x)}{x}\right]$$

$$\left(\frac{\Delta R}{R}\right)_y = \frac{x\cdot y}{R^2}\cdot\left[\frac{\delta_x(y)+z\cdot[\alpha_y(y)+\theta_{xy}]}{y}\right]+\frac{y^2}{R^2}\cdot\left[\frac{\delta_y(y)-z\cdot\alpha_x(y)}{y}\right]+\frac{y\cdot z}{R^2}\cdot\frac{\delta_z(y)}{y}$$

$$\left(\frac{\Delta R}{R}\right)_z = \frac{x\cdot z}{R^2}\cdot\left[\frac{\delta_x(z)}{z}\right]+\frac{y\cdot z}{R^2}\cdot\left[\frac{\delta_y(z)}{z}\right]+\frac{z^2}{R^2}\cdot\left[\frac{\delta_z(z)}{z}\right]$$

$$(3)$$

Let

$$\widetilde{\delta}_z(x) = \delta_z(x) - y\cdot\alpha_x(x)$$

$$\widetilde{\delta}_x = \delta_x(x) - y\cdot\left[\alpha_z(x)+\theta_{xy}\right]+z\cdot\alpha_y(x)$$

$$\widetilde{\delta}_x(y) = \delta_x(y) + z\cdot\left[\alpha_y(y)+\theta_{xy}\right]$$

$$\widetilde{\delta}_y(x) = \delta_y(x) - z\cdot\left[\alpha_x(x)+\theta_{yz}\right]$$

$$(4)$$

$$\widetilde{\delta}_y(y) = \delta_y(y) - z\cdot\alpha_x(y)$$

$$\widetilde{\delta}_z(y) = \delta_z(y)$$

$$\widetilde{\delta}_x(z) = \delta_x(z)$$

$$\widetilde{\delta}_y(z) = \delta_y(z)$$

$$\widetilde{\delta}_z(z) = \delta_z(z)$$

Then Eq. (3) can be expressed as

$$\left(\frac{\Delta R}{R}\right)_x = \frac{x^2}{R^2} \cdot \frac{\widetilde{\delta}_x(x)}{x} + \frac{y \cdot x}{R^2} \cdot \frac{\widetilde{\delta}_y(x)}{x} + \frac{z \cdot x}{R^2} \cdot \frac{\widetilde{\delta}_z(x)}{x}$$

$$( 5 )$$

$$\left(\frac{\Delta R}{R}\right)_y = \frac{y^2}{R^2} \cdot \frac{\widetilde{\delta}_y(y)}{y} + \frac{x \cdot y}{R^2} \cdot \frac{\widetilde{\delta}_x(y)}{y} + \frac{z \cdot y}{R^2} \cdot \frac{\widetilde{\delta}_z(y)}{y}$$

$$\left(\frac{\Delta R}{R}\right)_z = \frac{z^2}{R^2} \cdot \frac{\widetilde{\delta}_z(z)}{z} + \frac{x \cdot z}{R^2} \cdot \frac{\widetilde{\delta}_x(z)}{z} + \frac{y \cdot z}{R^2} \cdot \frac{\widetilde{\delta}_y(z)}{z}$$

6) Squareness Error

When the angle between X and Y is not exactly 90 degrees, then the diagonal distance R is equal to

$$\sqrt{x^2 + y^2 + 2xy \cos\varphi}$$

where $\phi = 90° + \theta_{xy}$

For small $\theta_{xy}$, $\cos\phi$ can be approximated to $\theta_{xy}$. Hence,

$$R^2 = x^2 + y^2 + 2xy\theta_{xy}$$

Therefore, the change in diagonal distance due to non-squareness can be expressed as

$$\left(\frac{\Delta R}{R}\right)_s = \frac{y \cdot z}{R^2} \cdot \vartheta_{yz} + \frac{y \cdot x}{R^2} \cdot \vartheta_{yz} + \frac{z \cdot x}{R^2} \cdot \vartheta_{zx} \qquad (6)$$

where

$\theta_{yz}$   is non-squareness in the YZ-plane,
$\theta_{yx}$   is non-squareness in the YX-plane, and
$\theta_{zx}$   is the non-squareness in the ZX-plane.

7) Four diagonal measurements

There are 4 diagonals, namely
from

(0, 0, 0) to (X, Y, Z) :     diagonal #1
(X. 0, 0) to (0, Y, Z) :     diagonal #2
(0, Y, 0) to (X, 0, Z) :     diagonal #3
(0, 0, Z) to (X, Y, 0) :     diagonal #4

and the reverses. Please note that,

Diagonal #1     all increments in X, Y, Z are positive
Diagonal #2     all increments in Y and Z are positive and increment in X is negative
Diagonal #3     all increments in X and Z are positive and increment Y is negative
Diagonal #4     all increments in X and Y are positive and increment in Z is negative

Substitute these into Eq (8), we have

$$\left(\frac{\Delta R}{R}\right)_x (+,+,+) = \frac{x^2}{R^2} \cdot \frac{\tilde{\delta}_x(x)}{x} + \frac{y \cdot x}{R^2} \cdot \frac{\tilde{\delta}_y(x)}{x} + \frac{z \cdot x}{R^2} \cdot \frac{\tilde{\delta}_z(x)}{x}$$

$$\left(\frac{\Delta R}{R}\right)_x (-,+,+) = \frac{x^2}{R^2} \cdot \frac{\tilde{\delta}_x(x)}{x} - \frac{y \cdot x}{R^2} \cdot \frac{\tilde{\delta}_y(x)}{x} - \frac{z \cdot x}{R^2} \cdot \frac{\tilde{\delta}_z(x)}{x}$$

$$\left(\frac{\Delta R}{R}\right)_x ( \quad ) \frac{x}{R} \frac{{}_x(x)}{x} \frac{y \ x}{R} \frac{{}_y(x)}{x} \frac{z \ x}{R} \frac{{}_z(x)}{x}$$

$$\left(\frac{\Delta R}{R}\right)_x (+,+,-) = \frac{x^2}{R^2} \cdot \frac{\tilde{\delta}_x(x)}{x} + \frac{y \cdot x}{R^2} \cdot \frac{\tilde{\delta}_y(x)}{x} - \frac{z \cdot x}{R^2} \cdot \frac{\tilde{\delta}_z(x)}{x}$$

Similarly for

$$\left(\frac{\Delta R}{R}\right)_y$$

and

$$\left(\frac{\Delta R}{R}\right)_z$$

$$\frac{\tilde{\delta}_z(x)}{z} = \frac{1}{2} \cdot \frac{R^2}{|x \cdot z|} \cdot \left[ \left(\frac{\Delta R}{R}\right)_x (+,+,+) - \left(\frac{\Delta R}{R}\right)_x (+,+,-) \right]$$

$$\frac{\tilde{\delta}_y(x)}{y} = \frac{1}{2} \cdot \frac{R^2}{|x \cdot y|} \cdot \left[ \left(\frac{\Delta R}{R}\right)_x (+,+,+) - \left(\frac{\Delta R}{R}\right)_x (+,-,+) \right]$$

Solve these Equations for $\delta_x(x)$,

$$\tilde{\delta}_y(x)$$

and

$$\widetilde{\delta}_z(x)$$

we have

$$\frac{\widetilde{\delta}_x(x)}{x} = \frac{1}{2} \cdot \frac{R^2}{x^2} \cdot \left[ \left(\frac{\Delta R}{R}\right)_x (+,+,+) + \left(\frac{\Delta R}{R}\right)_x (-,+,+) \right] \qquad (8)$$

Similarly is the *y*-direction and z-direction

$$\frac{\widetilde{\delta}_z(z)}{z} = \frac{1}{2} \cdot \frac{R^2}{z^2} \cdot \left[ \left(\frac{\Delta R}{R}\right)_z (+,+,+) + \left(\frac{\Delta R}{R}\right)_z (+,+,-) \right]$$

$$\frac{\widetilde{\delta}_y(z)}{y} = \frac{1}{2} \cdot \frac{R^2}{|y \cdot z|} \cdot \left[ \left(\frac{\Delta R}{R}\right)_z (+,+,+) - \left(\frac{\Delta R}{R}\right)_z (+,-,+) \right]$$

$$\frac{\widetilde{\delta}_x(z)}{x} = \frac{1}{2} \cdot \frac{R^2}{|x \cdot z|} \cdot \left[ \left(\frac{\Delta R}{R}\right)_z (+,+,+) - \left(\frac{\Delta R}{R}\right)_z (-,+,+) \right]$$

$$\frac{\widetilde{\delta}_z(y)}{z} = \frac{1}{2} \cdot \frac{R^2}{|y \cdot z|} \cdot \left[ \left(\frac{\Delta R}{R}\right)_y (+,+,+) - \left(\frac{\Delta R}{R}\right)_y (+,+,-) \right] \qquad (9)$$

$$\frac{\widetilde{\delta}_y(y)}{y} = \frac{1}{2} \cdot \frac{R^2}{y^2} \cdot \left[ \left(\frac{\Delta R}{R}\right)_y (+,+,+) + \left(\frac{\Delta R}{R}\right)_y (+,-,+) \right]$$

$$\frac{\widetilde{\delta}_x(y)}{x} = \frac{1}{2} \cdot \frac{R^2}{|x \cdot y|} \cdot \left[ \left(\frac{\Delta R}{R}\right)_y (+,+,+) - \left(\frac{\Delta R}{R}\right)_y (-,+,+) \right]$$

8) Squareness Errors

The squareness errors can be determined by the displacement error at the end point of the 4 diagonal measurements.
Solve Eq (6), we have

$$\vartheta_{yz} = \frac{1}{2} \cdot \frac{R^2}{|yz|} \cdot [Diagonal\#1 + Diagnal\#2]$$

$$\vartheta_{zx} = \frac{1}{2} \cdot \frac{R^2}{|zx|} \cdot [Diagonal\#1 + Diagnal\#3]$$

$$\vartheta_{yx} = \frac{1}{2} \cdot \frac{R^2}{|yx|} \cdot [Diagonal\#1 + Diagnal\#4] \qquad (10)$$

(9) Sort data and order

The sequential diagonal measurement collects data after each axis movement. Hence, three times more data are collected. Sort out all position errors due to X-axis movement, Y-axis movement and z-axis movement. These measured position errors are $\Delta R_x$, $\Delta R_y$ and $\Delta R_z$ For machines with small angular errors and small non-rigid body errors, is very close to $\delta$. To determine the angular errors and non-rigid body errors, data collected by different sequences, such as YZX, ZXY, etc. are needed. The angular errors and non-rigid body errors can be calculated by the measured data.

**Detailed description of the exemplary embodiment in Figs. 2-12**

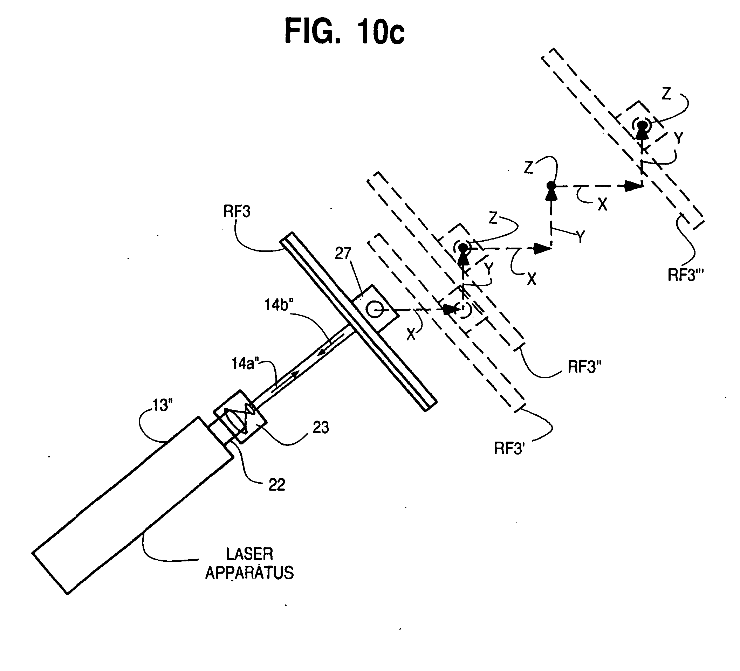

Refer now to Fig. 2 which shows the volumetric space in which the body to be moved by the present invention can be moved by the machine involved. The Figure shows five diagonal segments S1, S2, S3, S4 and S5 of a diagonal r of that space and alone, which diagonal the laser beam of a laser interferometer position measuring system is directed. The diagonal r is shown as extending between points (0,0,0) and (X,Y, Z). The opposite diagonal to that diagonal not shown in Fig. 2 would extend between points (O,O,Y) and (X,Y,O). The body carries a retroreflector, which can be a retroreflector like RF2 shown in Fig. 10a or a flat reflector RF3 like that shown in Figs 10b and 10c.

In accordance with the present invention, the body is moved sequentially in incremental movement groups in directions parallel to or along the X, Y and Z axes of this space. Each movement group starts at the beginning of a diagonal segment and ends at the incremental of the next segment of the diagonal. At the end of each incremental X, Y or Z axis increment of movement the laser interferometer position measuring system makes a measurement of the distance between the laser beam source and the point along the diagonal involved where the reflector intercepts the laser beam and stores the measurement in a computer memory where the various error variables are computed after position measurements are completed. It is preferred that the body movement is halted during each position measurement. Position measurements as just described are taken for body movement along a pair of opposite diagonals of the volumetric space for machines with a large aspect ratio and for body movements along all four diagonals of this space for machines which do not have a large aspect ratio.

The position of the end of the first diagonal segment S 1 can be represented by X, Y and Z coordinates or in polar coordinates as a vector having a length r and making angles Theta and Phi shown in Fig. 1 with respect to the X and Z axis lines there shown.

For a conventional prior art diagonal measurement the body to be moved is always moved continuously along each diagonal, in contrast to the incremental movement groups described above where the body involved is only located on the diagonal at the ends of the diagonal segments. The distance of each such incremental movement can be described in terms of the length r of each diagonal segment and the angles Theta and Phi as follows: Each X axis incremental movement starting with an x axis movement is a distance $r\mathrm{Cos}\phi$. Each Y axis incremental movement is a distance $r\mathrm{Sin}\phi\mathrm{Sin}\theta$. Each Z axis incremental movement is a distance $r\mathrm{Sin}\phi\mathrm{Cos}\theta$.

Refer now to Fig. 3 which is a block diagram showing a motor controller 10 in block form and three motors 12a, 12b and 12c controlled thereby to drive the tool bit or other body being moved along the X, Y and Z axes. The motor controller 10 is programmed to drive the body along each axis in sequence instead of simultaneously operating to achieve the body along the diagonal.

The software which operates the controller 10 to move the tool bit or other body involved in a given selected sequence which is repeated for each segment of the diagonal involved. There are 6 possible sequences, namely XYZ, YZX, ZXY, XZY, YXZ and ZYX. Depending upon the degree to which various error calculations are desired to be made, measurements for one or more sequences will be made and error calculations made therefrom. The segments of the diagonal for which each body movement of a selected diagonal are carried out preferably are of equal length segments, but they could be of different length.

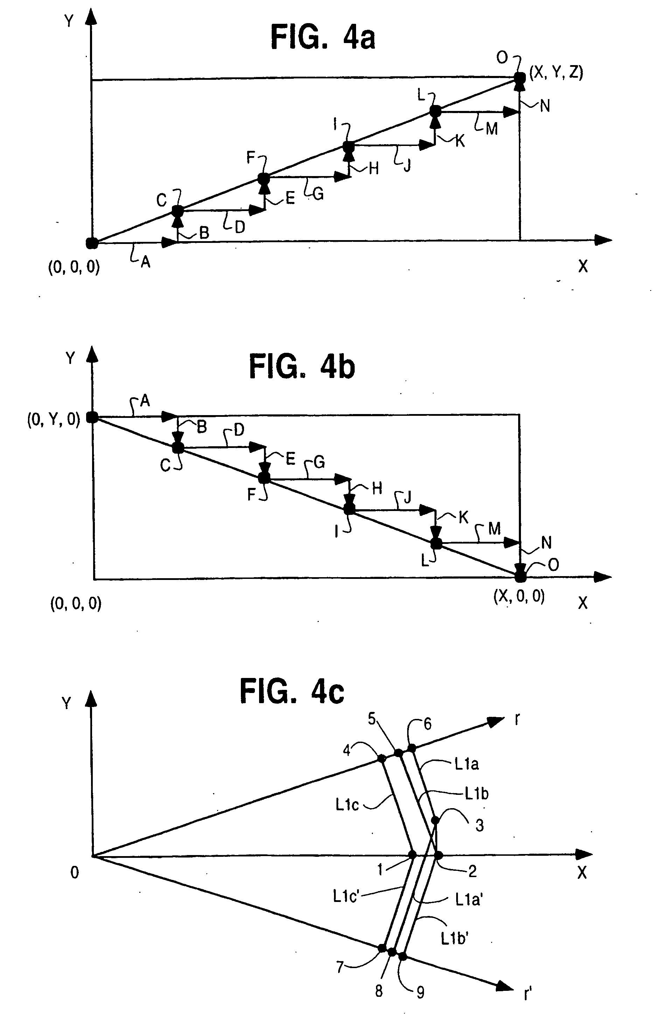

Refer now to Fig. 4a and 4b which respectively show the paths of body movement with respect to the opposite diagonals of an elongated volumetric space as described above in connection with Fig. 2. The X and Y axis movements are shown respectively by arrows A-D-G-J-M and B-E-H-K-N representing various body movement steps. The Z axis movement out of the plane of the drawing is shown as dots C-F-I-L-O. The body movement illustrated in Fig. 4a starts from point (0,0,0) at the beginning diagonal r shown in Fig. 2 and ends at point (X,Y,Z) on the diagonal r there shown.

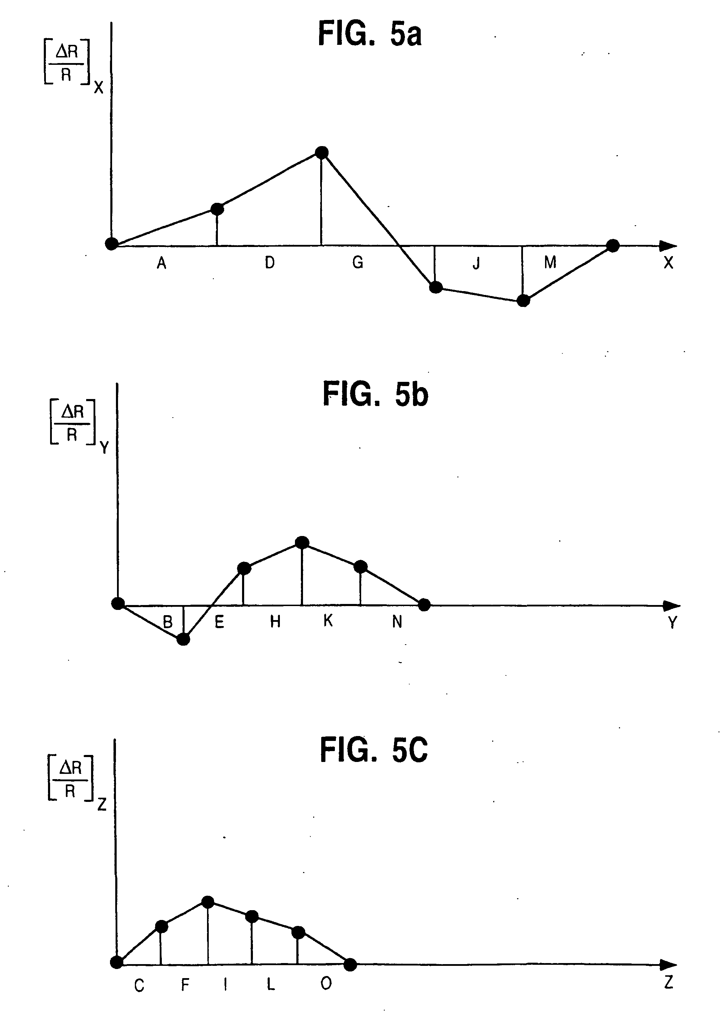

The body movement illustrated in Fig.4b starts at the beginning of the opposite diagonal (not shown in Fig. 2) at point (0,Y,0) therein and ends at the point (X,0,0) on this opposite diagonal r'. The curves of Fig. 5a, 5b and 5c show the result of the position error data collected in an exemplary test run for the various position control steps A-0 previously described. The Delta R is the measurement error computed from the position measurements automatically by the computer program involved for the lettered steps shown in connection with the curves. The X-axis error measurements at the end of steps A, D, G, J, M, are shown in the first curve of Fig. 5a. Similarly for Y-axis movement and Z-axis movement, the position errors are shown in the second and third curves of Figs, 5b and 5c respectively at the ends of the letter designated steps.

Fig. 4c is a two dimensional view looking down upon the XY plane illustrating the relationship between the measured Delta R for the two opposite diagonals r and r' involved. The Figure represents the linear displacement and straightness errors occurring when a body is desirably moved from point 0 in the X axis direction to a point I on the X axis but because of linear displacement and straightness errors is moved instead to point 3, a small error distance equal to the distance between points 2 and 3 in the plus Y axis direction and a small error distance between points 1 and 2 in the X axis direction. The line Lla represents a flat laser beam reflector carried by the body which intercepts a laser beam at point 6 directed along the diagonal r. If the laser beam was directed along the opposite diagonal r' instead, then the reflector carried by the body represented by the line

Lla' would intercept the laser beam at point 8 on diagonal r'. If the body had been moved the desired distance in only the X axis direction the body would have been at point 1 on this axis and the reflectors represented by the lines L1c and L1c' would intercept the laser beams involved at points 4 and 7 on the diagonals r and r'. The X axis linear displacement error distance between the points 1 and 3 on the X axis is measured by the difference in the laser reflection distance measurements for points 6 and 4 on the diagonal r and points 9 and 7 on the diagonal r'. If there had been no straightness error, then the body at point 2 on the X axis carrying reflectors represented by the lines L1c and L1c' would intercept the laser beam at points 5 and 8.

The relations between the measured $(\Delta R)_x(+,+)$, $(\Delta R)_x(+,-)$ and the displacement errors $\delta_x(x)$ and the straightness errors $\delta_y(x)$ are as follows.

Here, 2-1=$\delta_x(x)$, 3-2=$\delta_y(x)$

See Equations (2) and (3) for exact 3-dimensional relations.

$$(\Delta R)_x(+,-) = 9 - 7 = \delta_x(x) \cdot \frac{x}{R} - \delta_y(x) \cdot \frac{y}{R}$$

As previously indicated, Figs. 5a, 5b and 5c show examples of data analysis obtained from the error measurements obtained by the present invention. The $\Delta R$ is the measured position error in the diagonal direction. The subscript X, Y, and Z indicating the measured position error due to the X-axis, Y-axis, and Z-axis movement respectively, as a tool bit is moved respectively parallel to the X, Y and Z axes along the various lettered identified paths associated with the various segments of the diagonal shown in Fig. 2.

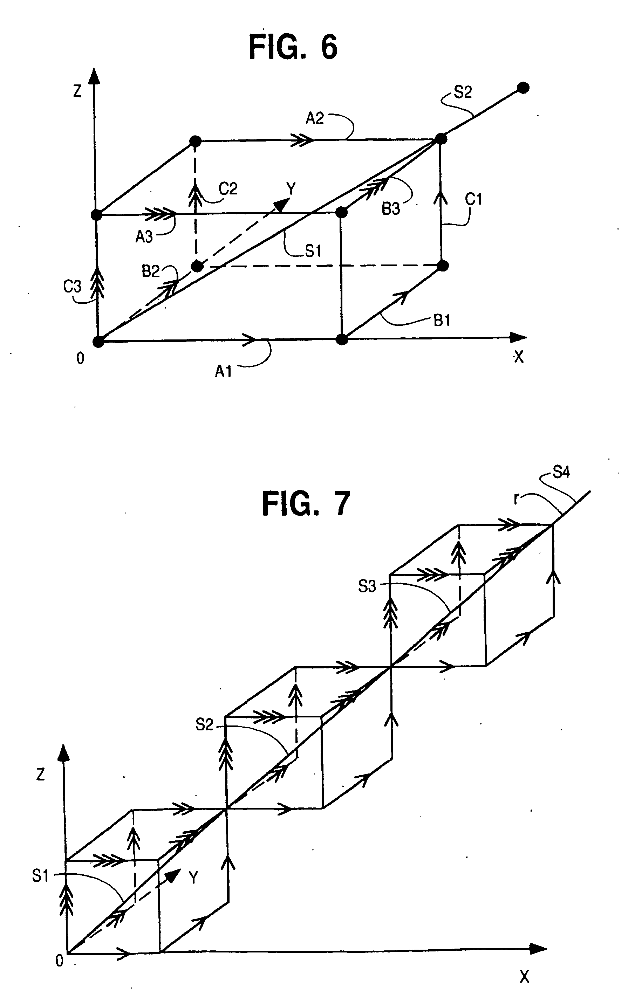

Refer now to Fig. 6, this is an exemplary diagram showing the letter identified functional steps performed by software program instructions for controlling the operation of the X, Y and Z axis motors shown in Fig. 3 to obtain the body movements described along a segment S1 of a diagonal of the volumetric space in which the machine being tested can move the body involved. Here for the XYZ axis sequence 1

$$(\Delta R)_x(+,+) = 6 - 4 = \delta_x(x) \cdot \frac{x}{R} + \delta_y(x) \cdot \frac{y}{R}$$

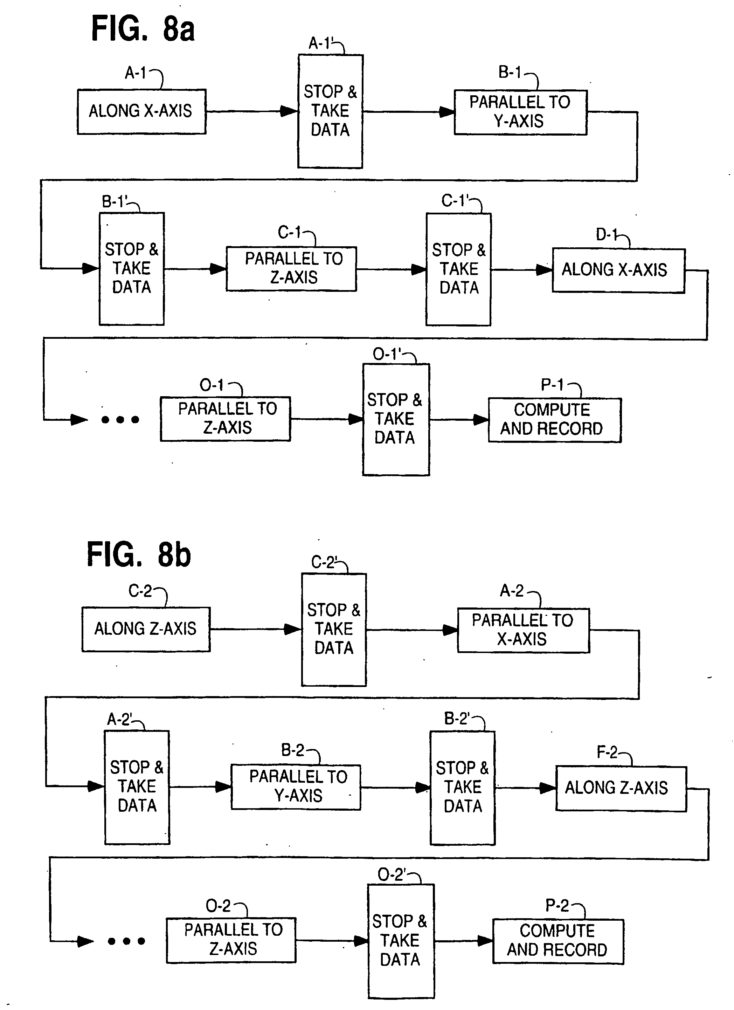

(shown with single arrows), the first body movement is shown by arrow Al in the direction of the X axis. At the end of this movement the laser measuring apparatus measures and records the distance between O and the point on the diagonal segment S 1 where the laser beam is reflected by the reflector carried by the body. The body is then moved in the Y axis direction indicated by arrow B 1 until the body is in a position where a movement run the Z axis direction would return the body to the end of segment S1 if there was no error in such body movement. The above described laser reflecting distance measurement and recording operation is then carried out. To complete this one XYZ axis sequence the body is then moved along the Z axis as indicated by the arrow C1 supposedly to return it to the end of the first diagonal segment and another laser reflection point measurement is taken and recorded as described. The steps just described are repeated until the body is supposedly at the end of the last segment except for the accumulated errors of movement. Fig. 8a is a block diagram showing the program flow diagram of the main functional steps carried out by the motor control and laser measuring and recording means involved. These steps are identified by the boxes A-1, B-1 ... 0-1 (the alphabet characters duplicating those used in Fig. 4a). The last program function carried out is the computation and recording of the appropriate error components as described.

Where backlash problems are to be avoided, as previously explained, the body is then moved between the end of the diagonal involved to the beginning thereof traversing the same supposed paths in the reverse sequence order, that is the ZYX order, and the same measurements are taken and recorded.

Where the error data to be collected calls for more than one sequence to be used, then the body movements, measuring and recording steps just described for the sequence XYZ are earned out for other sequences. Fig. 6 shows the body movements involved for the YZX and ZXY sequences as indicated respectively by the double and triple arrows B2-C2-A2 and C3-A3-B3. Fig. 8b shows the program flow diagram for the ZXY sequence identified by the arrows C3-A3-B3 in Fig. 6.

Refer now to Fig. 6, which shows the actual body movements about the first segment of a diagonal for three of the possible 6 movement sequences. The single arrows indicate the movement of X-axis first, then Y-axis and Z-axis. The double arrows indicated the movement of Y-axis first, then Z-axis and X-axis. The triple arrows indicated the movement of Z-axis first, then X-axis and Y-axis. The segments containing the arrows A1, A2, and A3 in the same direction but separated by a fixed distance should show the same error results, except for what is referred to as the Abbe offset for the angular errors. Hence the differences of errors on these segments can be used to determine the angular errors due to X displacement. Similarly, the body movements represented by the arrows BI, B2, and B3 can be used to determine the angular errors due to Y axis displacement and the body movements represented by the arrows C I, C2 and C3 can be used to determine the angular errors due to Z axis displacement. The broader aspects of the invention envision movement steps other than those following the shape of a cube as shown in Fig. 6. Fig. 7 shows body movement sequences following a non-cubic path over 3 segments of a diagonal.

It is noted that for all these sequential diagonal data collections, the laser direction stayed the same, only the movement sequences are changed. Hence a large amount of data can be collected with a single setting. With 4 settings all 4 diagonals can be measured. Hence it is possible to collect all the data along 4 diagonals within a few hours. Since the machine movements can be preprogrammed and the data collections are all automatic, this minimized the human error and saves time.

Now it would be helpful if we discuss various laser measuring apparatus useful (and not useful) in making the various position measurements above described. Fig. 9a is a plan view of the volumetric space in which the body can be moved, looking toward the XY plane. The Figure shows the initial segments of the diagonal r along which the body position errors measurements are taken. The Figure also shows the laser beam of the interferometer which makes such measurements directed along such diagonal and an inoperable conventional sized retroreflector RF1 carried by such body and of such small size as to not intercept the laser beam when the body is initially moved the required short distance along the X axis.

Fig. 9b is a view similar to Fig. 9a except that the body carries a relatively large retroreflector RF2 which intercepts the laser beam for the incremental X, Y and Z axis directional movements of the body. The size of the retroreflector is determined by the unit movement along the X-axis times $\sin\phi$, where $\phi$ is the angle shown in Fig. 1. The large retroreflector can reflect the laser beam toward the laser head. However the large lateral displacement can displace the return beam away from the receiver and the measurement interrupted, unless a double-pass optical arrangement is used as shown as Fig. 10a.

Fig. 10a shows a double-pass laser measuring apparatus useable in the present invention The displacement of the large retroreflector RF2 along the selected diagonal in the various X, Y and Z axis directions involved is measured along the diagonal involved. The laser beam 14a starting from the laser head 13 at point A will be reflected at point B and C. The reflected laser beam 14b will reach a stationary flat mirror 16 at point D. The flat-mirror is perpendicular to the incoming laser beam. Then the reflected beam 14c will be coincident with the incoming beam. Hence the further reflected beam 14d will reach the beams starting point A at the single aperture of the laser apparatus 13. If the retroreflector is laterally moved a amount D, the beam will be reflected at reflector points E and F where it reaches point G on the flat mirror 16. The reflected beam will be reflected at points F and E where it is returned to.the single aperture point A of the laser apparatus 13. The optical path length ABCD is exactly equal to the path length AEFG. Hence the measurement is not effected by the large lateral displacement of the retroreflector. The maximum lateral displacement is equal to $\pm$ half of the retroreflector diameter.

Fig. 10b shows a commercially available double aperture laser head 13' with a modified optical arrangement using a flat-mirror RF3 as the target. The output laser beam 14a' is reflected by the flat-mirror target PF3 back towards the exit aperture. A beam splitter 18 then reflects half of the return beam towards a fixed high reflectivity mirror 20 which reflects the return beam towards the second receiving aperture of the laser head 13'.

Fig. 10c is a drawing of a laser measuring system using a flat-mirror RF3 as target, and an optical adapter 23 which converts the collimated laser beam directed from a single aperture laser apparatus 13" to a small diameter and divergent beam 14a". Therefore any small angular errors of the machine spindle will not cause the laser to be out of alignment. This beam 14a" is reflected by the large flat first surface of the mirror RF3 mounted on a spindle 27 of the machine tool system involved. The reflected beam 14b" is parallel to the output beam 14a" and passing though the optical adapter 23 to re-enter the receiving aperture of the laser head 13 ". The dotted lines RF3', RF3 ", and RF3''' show the spindle and the flat-mirror positions during the sequential XYZ axis movement steps.

The advantages of using an optical adapter 23 and a flat-mirror RF3 are lightweight, compact and lower cost as compared with using a large retroreflector and the double-pass optical arrangement shown in Fig 10a.

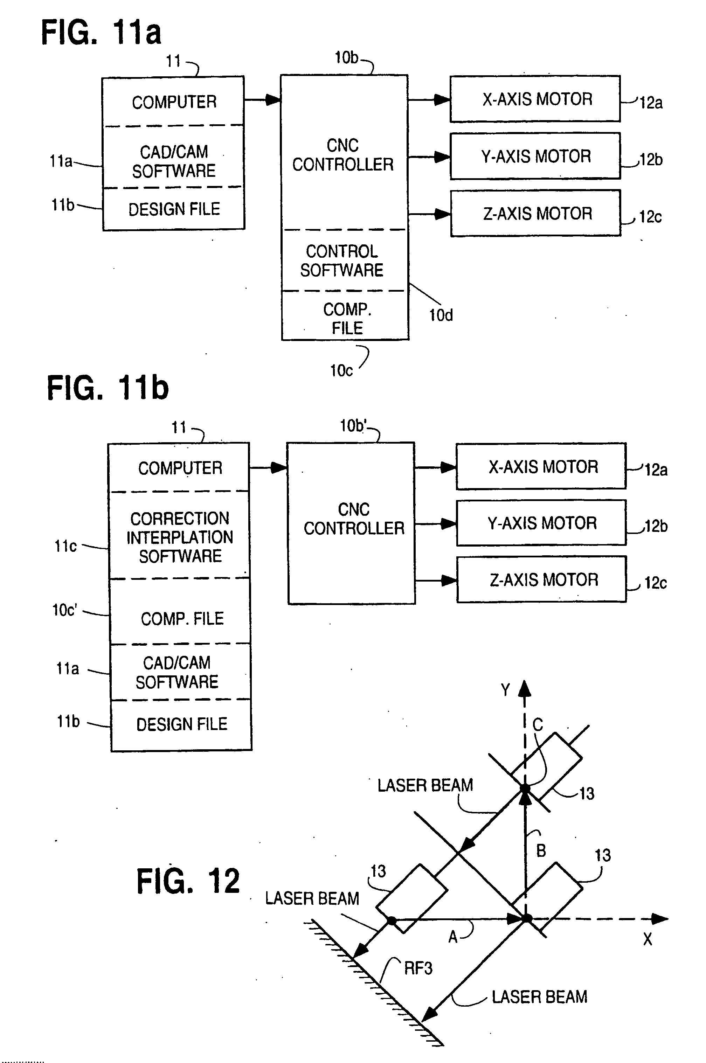

Fig. 11a shows a block diagram for the conventional error compensation scheme. Here the compensation file is stored inside the CNC (computer numerical control) controller 10b and the error compensation is done by lookup in a compensation file 10c stored in the CNC controller 10b and the feeding by that controller of corrected position control signals to the x-axis motor 12a, the y-axis motor 12b and the z-axis motor 12c. However, due to hardware limitations, it is rather difficult to compensate the angular errors and the non-rigid body errors. The motor control computer 11 has stored therein a design file 11a which identifies the details fo the shape of the product to be formed by the machine tool involved. The CAD/DAM software 11a in the computer 11 accesses the design file 11a and generates body position signals fed to the controller 10b having special compensation software 10d which converts the signals fed to the controller to modified motor control signals which will compensate for the errors stored in the compensation file 10c so that the motors will more accurately control the position of the machine tool or other body involved.

A typical compensation file contains a table, part of which could be as follows;

| | $\delta_x(x)$ | $\delta_y(x)$ | $\delta_z(x)$ |
|---|---|---|---|
| x=0 | 0.00001 | -0.00001 | 0.000001 |
| x = 1 in | 0.00002 | 0.00001 | 0.000002 |
| x = 2 in | -0.000003 | 0.00002 | 0.00005 |
| x = 3 in | . | . | . |
| . | . | . | . |
| . | . | . | . |
| x = 20 in | 0.00001 | 0,000035 | 0,000009 |

| | $\delta_x(y)$ | $\delta_y(y)$ | $\delta_z(y)$ |
|---|---|---|---|
| y=0 | 0.000003 | -0.00001 | 0.000035 |
| y = 1.5 in | 0.000025 | -0.00003 | 0.000045 |
| y = 3 in | 0.000008 | -0.00008 | 0.000025 |
| y = 4.5 in | -0.000009 | 0.00009 | 0.000001 |
| . | . | . | . |
| . | . | . | . |
| y = 30 in | 0.000035 | 0.000009 | -0.000008 |

| | $\delta_x(z)$ | $\delta_y(z)$ | $\delta_z(z)$ |
|---|---|---|---|
| z = 0 | -0.000056 | 0.000076 | 0.000013 |
| z = 2 in | -0.000023 | -0.00003 | 0.000002 |
| z = 4 in | 0.000014 | -0.00008 | 0.00005 |
| . | . | . | . |
| . | . | . | . |
| . | . | . | . |
| z = 40 in | 0.0000085 | -0.0000089 | -0.0000089 |

These errors due to X, Y and Z axis movement consist of linear displacement errors, vertical straightness and horizontal straightness errors for each measured increment of the whole body travel along each of these axes. For movements less than these increments, the controller will send position control signals which include error correction components which are proportional to the lesser degrees of movement involved.

The compensation file can be designed to include squareness, pitch, yaw and roll angular errors derived from the added vector measurements and calculations made therefrom as previously indicated in this specification.

As shown in Fig. 11b, another aspect of the invention is to take the compensation function out of the controller 10b of Fig. 11a, which must be custom designed to work with the compensation file 10c, so that a standard CNC controller 10b' can be used. This requires machine error correction interpolator software 11c. The error correction interpolator software 11 c is placed in the computer 11 where it accesses the compensation file 10c' also now in the computer 11 and responds also to the signals generated by the CAD/CAM software 11a. The compensation file 10c' can be that produced by the inferior prior art, but is preferably a file generated by the present method invention above described. The interpolator software 11c effects the modification of the signals which the CAD/CAM software generates upon accessing the design file 11b in the computer to generate signals fed to the controller 10b' which will cause the controller 10b' to energize the motors 12a, 12b and 12c to move the body involved more accurately. As above indicated, the interpolation software 11c permits both the computer 11 and controller 10b' to be the standard computer and controller used with the particular computer controlled machine tool or other body movement system involved. In other words, the interpolator 10d generates tool path control signals which are pre-corrected with the measured machine errors. Then the corrected body path signals are fed to the controller 10b'. Since all the corrections are done in the software there is no hardware limitation. Thus, the output of the CAD/CAM and the input of the controller are standard, hence the machine error correction interpolator can be used on any standard machine tool motor control system.

As previously indicated, while Figs. 2-10c illustrate the preferred method and apparatus aspects of the invention which produces the compensation file 10c using a laser measuring system where the reflector is mounted on the machine tool spindle or other body to be moved, the broader aspects of the invention includes the placement of the measuring apparatus which generates the laser or other beam involved on the body to be moved mounting the reflector on a stationary mounting surface. Fig. 12 illustrates this form of the invention where reflector RF3 is a very large stationary reflector and the laser apparatus 13 is carried by the machine tool spindle which, during the error collection data process, is moved in groups of X, Y and Z axis movement increments indicated by the arrows A, B and C. The apparatus 13 is shown directing the beam parallel to a diagonal of the three dimensional volumetric space involved for all positions of the spindle. The reflecting surface of the reflector RF3 is shown at right angles to the laser beam at all times

It should be understood that numerous modifications and additions can be made in the various exemplary forms of the invention disclosed herein without deviating from the broadest aspects of the invention. However, these exemplary forms of the invention are to be considered specific aspects of the invention.

**Claims**

1.  A method of measuring the position error of a body moved in a body measuring apparatus which directs a reflectable energy beam (14a) in a given direction therefrom and a reflector (RF3) which is to reflect said beam (14a) back to said apparatus to obtain position error measurements of said body to be moved under computer control in paths having predetermined measuring points therealong and which are non-parallel to said beam direction,
    said method comprising the steps of:

    placing one of said reflector (RF3) and measuring apparatus on said body and mounting the other of same at a stationary point relative thereto so that as said body is moved by said computer along said paths said measuring apparatus measures and records the distance between said reflector (RF3) and apparatus, said reflector (RF3) being sufficiently large to intercept said beam (14a) at said points as said body is so moved;
    a computer (11) to control said body position then being operated to direct the body to move along said paths so that said reflector intercepts and reflects the energy beam (14a) back to said apparatus for actual reflector position measurements as said body is supposed to reach said predetermined points, there being stored in a memory the ideal distances between said reflector and apparatus if said computer (11) had ideally directed said body to said predetermined measurement points;
    using said measuring apparatus to determine and record the actual positions of said body at said measuring points along said paths by first measuring and recording therewith the actual positions of said reflector (RF3) along the direction said beam (14a) is directed, comparing such measurements with said stored ideal reflector distances to determine the reflector distance measurement errors when the body is at said measuring point, and then computing and recording from each reflector distance measurement error the body movement error components when said body was at said measuring points,

    **characterized in that**
    a flat reflecting surface against which the beam (14a) is directed at right angles is used as said reflector (RF3), and **in that** the beam (14a) is a divergent beam.

2.  The method according to claim 1,
    **characterized in that**
    the measurements are carried out in a given three dimensional space having three orthogonal axes (X, Y, Z) and four opposite diagonals (r, r').

3.  The method according to claim 2,

**characterized in that**
all of said steps are repeated for at least two more up to all of said four opposite diagonals (r, r') of said space to compute body movement error components based on all of the measurements taken.

**4.** The method according to any one of the preceding claims, **characterized in that** a beam directing means (13) directs said diverging energy beam toward said flat reflecting surface (RF3) .

**5.** The method according to claim 2,
**characterized in that**
said method includes the steps of:

directing said beam (14a) from said beam directing means (13) along a selected one of said diagonals (r, r'); operating said computer (11) to move said body between the ends of said one diagonal (r, r') in said space, said movement between the ends of said one diagonal (r, r') being in identical repeated groups of sequential incremental movement sequences opposite the various segments (S1 - S5) of said selected diagonal (r, r') so that the first step in each group in the absence of any movement errors begins at one end of a segment (S1 - S5) and proceeds parallel to one of the orthogonal axes of said space and ends at a first measuring point, the second step in each group then proceeds parallel to a second of said axes and ends at a second measuring point and the last step in each group proceeds parallel to the other of said axes and terminates at a given desired measuring point which in the absence of any position error would be at the end of the diagonal segment (S1 - S5) involved, said one reflector (RF3) then intercepting the beam directed along said selected diagonal (r, r') even though the body is not moved parallel to the beam direction; measuring with said apparatus the actual reflector distances, which are the distances from said one reflector (RF3) to said beam directing means (13) along the selected diagonal (r, r') when the body is moved to said respective measuring points at the ends of each of said incremental movements; and computing, from the data based on said actual reflector distances and the ideal body position distances, body movement error components.

**6.** The method according to claim 5,
**characterized in that**
it is repeated for each of said axis movement sequences to take into account backlash body movement error components.

**7.** The method according to claim 5,
**characterized in that**
error compensation tables (10c) are prepared from the body movement error computations and said compensation tables (10c) are used to correct the movement of said body by the computer (11) involved.

**8.** The method according to claim 7,
**characterized in that**
it collects at least three sets of data for body movements relative to at least 3 opposite diagonals (r, r') followed by the steps of calculating at least 3 displacement errors and 6 straightness errors relative to said axes which are incorporated into said compensation tables (10c) so that the movement of said body by said computer (11) is done more accurately.

**9.** The method according to claim 5,
**characterized in that**
all of said steps are repeated for enough opposite diagonals (r, r') and different ones of the possible six different body movement sequences if needed to collect enough body movement error components to compute at least the linear, straightness and squareness error components relative to each axis, then computing at least said linear and straightness error components relative to each axis, and preparing compensation tables (10c) from said body movement error computations which can be used to generate X, Y and Z axis motor control signals fed to the computer (11) controlling said body to improve body position accuracy.

**10.** The method according to claim 5,
**characterized in that**
it is repeated for enough opposite diagonals (r, r') and/or different ones of said possible six different body movement sequences to compute body movement error components which include the squareness, pitch, yaw and roll error components relative to each axis, and then computing amd storing in said compensation table (10c) at least said squareness, pitch, yaw and roll error components relative to each axis.

11. The method according to claim 5,
**characterized in that**
it is repeated for enough opposite diagonals (r, r') and/or different ones of said possible six different body movement sequences to compute a non-rigid body error component, and then computing and storing in said compensation table (10c) said non-rigid body error component.

12. An apparatus for measuring the body position error of a moved body, comprising:

a beam apparatus (13) for directing an energy beam (14a) in a given direction from a first point and responding to the change in a characteristic of the beam (14a) returning to said point by indicating the change in the overall beam path length involved;
a reflector (RF3) for reflecting said beam (14a); and
one of said reflector (RF3) and beam apparatus (13) being mounted on a body to be moved along a given path and the other of same being mounted at a relatively stationary point, said reflector (RF3) being adapted to return the beam (14a) to said first point of said beam apparatus (13) and being of a size that the reflector (RF3) so reflects said beam (14a) even when the body is moved in a path non-parallel to said beam direction,

**characterized in that**
said reflector (RF3) is a flat reflecting surface against which the beam (14a) is directed at right angles, and **in that** the beam (14a) is a divergent beam.

13. The apparatus according to claim 12,
**characterized in that**
it carries out the measurements in a given three dimensional space having three orthogonal axes (X, Y, Z) and four opposite diagonals (r, r') and
means are provided for repeating all of said steps for at least two more of said opposite diagonals (r, r') to compute body movement error components based on all of the measurements taken.

14. The apparatus according to claim 12 or 13,
**characterized in that**
it includes means for generating from said body movement error components a compensation table (10c) which, when downloaded into the computer (11) which is to control the body movement in the normal operative control of the movement of said body will reduce the movement errors by compensating for said movement errors.

15. The apparatus according to claim 13 or 14,
**characterized in that**
it includes a body positioning motor control system for moving a body along said orthogonal axes in a volumetric space, said system including:

X, Y and Z axis body positioning motors (12a, 12b, 12c), a controller (10b, 10b') with X, Y and Z axis motors energizing signal outputs for generating a variable output for energizing the respective motors (12a, 12b, 12c) in varying degrees depending on the value of the output signal variable; and
a CAD/CAM controlled computer (11) for generating ideal control signals for the controller (10b, 10b') which develops therefrom said motor energizing signals;
an error compensation file which contains tables (10c) indicating the body movement error components;
controller output signal modifying means for converting said body movement error components of said file to controller output modifying signals which energize said motors (12a, 12b, 12c) in a manner to correct for said body movement errors so that the body is actually moved along the desired paths called for by the CAD/CAM controlled computer output, said controller output signal modifying means being correction interpolator software means (11c) responsive to the error in said compensation file (10c) for modifying the signal output of said CAD/CAM controlled computer (11) fed to the controller (10b, 10b') so that controller output signals move the body in the desired path so that the body movement error correction is achieved without the need to modify a pre-existing controller.

16. The apparatus according to any one of claims 12 to 15,

**characterized in that**

said beam directing means (13') and reflector means form a double-aperture distance measuring system wherein said beam directing means (13") directs a beam (14a') in a given direction from a first aperture thereof and the system responds to the change in a characteristic of the beam (14d') returning to a second aperture thereof by indicating the change in the overall beam path length involved, and said reflector means includes a series of reflectors for reflecting said beam emanating from said first aperture to return the beam to a second aperture of said measuring system, one of said reflectors being a first flat mirror (RF3), another of said reflectors being a beam splitter (18) for directing the beam ultimately to said second aperture and another being a reflector (20) which directs the beam to said second aperture, one of said first flat mirror (RF3) and beam directing means (13') with the other reflectors (18, 20) being mounted an said body to be moved along a given path and the other of same being mounted at a relatively stationary point, said flat mirror (RF3) being oriented at right angles to the direction in which said diverging beam is directed from said first aperture to return the beam in the direction of said first aperture, said beam splitter (18) being in the path of the beam (14a') emitted from said first aperture to allow a portion thereof to reach said first flat mirror (RF3) which returns the beam it reflects to said beam splitter (18) which then directs a portion of the first reflected beam (14b') in a different direction toward said other reflector (20) which directs the same to said second aperture; said flat mirror (RF3) being of a size that the mirror (RF3) intercepts and reflects said beam back (14a') toward said beam splitter (18) even when the body is moved in a path non-parallel to said initial direction of the beam (14a').

17. The apparatus according to claim 16,
    **characterized in that**
    said other reflector (20) is a single flat mirror tilted at an angle to return the beam directed thereto from said beam splitter (18) to said second aperture of said beam directing means (13').

18. The apparatus according to any one of claims 12 to 17,
    **characterized in that**
    said one reflector (RF3) is a flat mirror to face the oncoming beam (14a, 14a', 14a") directed at right angles therero from the beam directing means (13), and said beam directing means (13) being adapted to direct a diverging beam (14a, 14a', 14a") thereto.

19. The apparatus according to any one of claims 12 to 18,
    **characterized in that**
    means are provided for repeating all of said steps for enough opposite diagonals (r, r') and different ones of the possible six different body movement sequences if needed to collect enough body movement error components to compute at least the linear, straightness and squareness error components relative to each axis, then computing at least said linear and straightness error components relative to each axis, and preparing compensation tables (10c) from said body movement error computations which can be used to generate X, Y and Z axis motor control signals fed to the computer (11) controlling said body to improve body position accuracy.

**Patentansprüche**

1. Verfahren zum Messen des Positionsfehlers eines bewegten Körpers in einer Körpermessvorrichtung, die einen reflektierbaren Energiestrahl (14a) in eine vorgegebene Richtung davon leitet, und einem Reflektor (RF3), der den Strahl (14a) zurück zu der Vorrichtung reflektieren soll, um Positionsfehlermessungen des Körpers zu erhalten, der unter Rechnersteuerung in Bahnen, die vorbestimmte Messpunkte dort entlang aufweisen und die zu der Strahlrichtung nicht parallel sind, zu bewegen ist, wobei das Verfahren folgende Schritte umfasst:

   - Platzieren von einem von dem Reflektor (RF3) und der Messvorrichtung an dem Körper und Montieren des anderen desselben an einem stationären Punkt relativ dazu, so dass, wenn der Körper durch den Rechner entlang der Bahnen bewegt wird, die Messvorrichtung die Distanz zwischen dem Reflektor (RF3) und der Vorrichtung misst und aufzeichnet, wobei der Reflektor (RF3) ausreichend groß ist, um den Strahl (14a) an den Punkten abzufangen, wenn der Körper so bewegt wird;

   - einen Rechner (11) zum Steuern der Körperposition, der dann bedient wird, um den Körper zu leiten, sich entlang der Bahnen zu bewegen, so dass der Reflektor den Energiestrahl (14a) abfängt und für Messungen der tatsächlichen Reflektorposition zurück zu der Vorrichtung reflektiert, während der Körper die vorbestimmten Punkte erreichen soll, wobei dort in einem Speicher die idealen Distanzen zwischen dem Reflektor und der Vorrichtung gespeichert werden, wenn der Rechner (11) den Körper idealerweise zu den vorbestimmten Messpunkten geleitet haben sollte;

- Verwenden der Messvorrichtung zum Bestimmen und Aufzeichnen der tatsächlichen Positionen des Körpers an den Messpunkten entlang der Bahnen, indem zuerst die tatsächlichen Positionen des Reflektors (RF3) entlang der Richtung, in der der Strahl (14a) geleitet wird, gemessen und damit aufgezeichnet werden, diese Messungen mit den gespeicherten idealen Reflektordistanzen verglichen werden, um die Reflektordistanzmessfehler zu bestimmen, wenn sich der Körper an dem Messpunkt befindet, und dann von jedem Reflektordistanzmessfehler die Körperbewegungsfehlerkomponenten, wenn sich der Körper an den Messpunkten befand, berechnet und aufgezeichnet werden,

**dadurch gekennzeichnet, dass** eine plane reflektierende Fläche, gegen die der Strahl (14a) in rechten Winkeln geleitet wird, als der Reflektor (RF3) verwendet wird, und **dadurch**, dass der Strahl (14a) ein divergenter Strahl ist.

2.  Verfahren nach Anspruch 1, **dadurch gekennzeichnet, dass** die Messungen in einem vorgegebenen dreidimensionalen Raum mit drei orthogonalen Achsen (X, Y, Z) und vier gegenüberliegenden Diagonalen (r, r') durchgeführt werden.

3.  Verfahren nach Anspruch 2, **dadurch gekennzeichnet, dass** alle der Schritte für wenigstens zwei mehr bis zu allen der vier gegenüberliegenden Diagonalen (r, r') des Raums wiederholt werden, um Körperbewegungsfehlerkomponenten basierend auf allen der genommenen Messungen zu berechnen.

4.  Verfahren nach einem der vorhergehenden Ansprüche, **dadurch gekennzeichnet, dass** eine Strahlleiteinrichtung (13) den divergierenden Energiestrahl zu der planen reflektierenden Fläche (RF3) hin leitet.

5.  Verfahren nach Anspruch 2, **dadurch gekennzeichnet, dass** das Verfahren die folgenden Schritte umfasst:

    - Leiten des Strahls (14a) von der Strahlleiteinrichtung (13) entlang einer gewählten der Diagonalen (r, r');

    - Bedienen des Rechners (11), um den Körper zwischen den Enden der einen Diagonalen (r, r') in dem Raum zu bewegen, wobei die Bewegung zwischen den Enden der einen Diagonalen (r, r') in identisch wiederholten Gruppen von sequenziellen inkrementalen Bewegungsfolgen entgegengesetzt zu den verschiedenen Segmenten (S1 bis S5) der gewählten Diagonale (r, r') erfolgt, so dass der erste Schritt in jeder Gruppe bei Nichtvorliegen von Bewegungsfehlern an einem Ende eines Segments (S1 bis S5) beginnt und parallel zu einem der orthogonalen Achsen des Raums fortfährt und an einem ersten Messpunkt endet, der zweite Schritt in jeder Gruppe dann parallel zu einer zweiten der Achsen fortfährt und an einem zweiten Messpunkt endet und der letzte Schritt in jeder Gruppe parallel zu der anderen der Achsen fortfährt und an einem vorgegebenen gewünschten Messpunkt endet, der bei Nichtvorliegen von einem Positionsfehler an dem Ende des involvierten diagonalen Segments (S1 bis S5) liegen würde, wobei der eine Reflektor (RF3) dann den entlang der gewählten Diagonale (r, r') geleiteten Strahl selbst dann abfängt, wenn der Körper nicht parallel zu der Strahlrichtung bewegt wird;

    - Messen mit der Vorrichtung der tatsächlichen Reflektordistanzen, die die Distanzen von dem einen Reflektor (RF3) zu der Strahlleiteinrichtung (13) entlang der gewählten Diagonale (r, r') sind, wenn der Körper zu den jeweiligen Messpunkten an den Enden von jeder der inkrementalen Bewegungen bewegt wird; und

    - Berechnen von Körperbewegungsfehlerkomponenten anhand der auf den tatsächlichen Reflektordistanzen und den idealen Körperpositionsdistanzen basierenden Daten.

6.  Verfahren nach Anspruch 5, **dadurch gekennzeichnet, dass** es für jede der Achsenbewegungsfolgen wiederholt wird, um Körperbewegungspielfehlerkomponenten zu berücksichtigen.

7.  Verfahren nach Anspruch 5, **dadurch gekennzeichnet, dass** Fehlerausgleichstabellen (10c) anhand der Körperbewegungsfehlerberechnungen angelegt werden und die Ausgleichstabellen (10c) zum Korrigieren der Bewegung des Körpers durch den involvierten Rechner (11) verwendet werden.

8.  Verfahren nach Anspruch 7, **dadurch gekennzeichnet, dass** es wenigstens drei Sätze von Daten für Körperbewegungen relativ zu wenigstens drei gegenüberliegenden Diagonalen (r, r') sammelt, gefolgt von den Schritten der Berechnung von wenigstens drei Verschiebungsfehlern und sechs Geradheitsfehlern relativ zu den Achsen, die in die Ausgleichstabellen (10c) aufgenommen werden, so dass die Bewegung des Körpers durch den Rechner (11) genauer erfolgt.

**9.** Verfahren nach Anspruch 5, **dadurch gekennzeichnet, dass** alle der Schritte für genügend gegenüberliegende Diagonale (r, r') und unterschiedliche der möglichen sechs unterschiedlichen Körperbewegungsfolgen wiederholt werden, wenn dies erforderlich ist, um genügend Körperbewegungsfehlerkomponenten zu sammeln, um wenigstens die Linear-, Geradheits- und Rechtwinkligkeitsfehlerkomponenten relativ zu jeder Achse zu berechnen, dann wenigstens die Linear- und Geradheitsfehlerkomponenten relativ zu jeder Achse zu berechnen und Ausgleichstabellen (10c) von diesen Körperbewegungsfehlerberechnungen anzulegen, die dazu verwendet werden können, X-, Y- und Z-Achsen-Motorsteuersignale zu erzeugen, die in den Rechner (11), der den Körper steuert, gespeist werden, um die Körperpositionsgenauigkeit zu verbessern.

**10.** Verfahren nach Anspruch 5, **dadurch gekennzeichnet, dass** es für genügend gegenüberliegende Diagonale (r, r') und/oder unterschiedliche der möglichen sechs unterschiedlichen Körperbewegungsfolgen wiederholt wird, um Körperbewegungsfehlerkomponenten, die die Rechtwinkligkeits-, Nick-, Gier- und Rollfehlerkomponenten relativ zu jeder Achse enthalten, zu berechnen und dann wenigstens die Rechtwinkligkeits-, Nick-, Gier- und Rollfehlerkomponenten relativ zu jeder Achse in der Ausgleichstabelle (10c) zu berechnen und zu speichern.

**11.** Verfahren nach Anspruch 5, **dadurch gekennzeichnet, dass** es für genügend gegenüberliegende Diagonale (r, r') und/oder unterschiedliche der möglichen sechs unterschiedlichen Körperbewegungsfolgen wiederholt wird, um eine Fehlerkomponente nichtstarrer Körper zu berechnen und dann die Fehlerkomponente nichtstarrer Körper in der Ausgleichstabelle (10c) zu berechnen und zu speichern.

**12.** Vorrichtung zum Messen des Körperpositionsfehlers eines bewegten Körpers, umfassend:

- eine Strahlvorrichtung (13) zum Leiten eines Energiestrahls (14a) in eine vorgegebene Richtung von einem ersten Punkt und Reagieren auf die Änderung eines Merkmals des zu dem Punkt zurückkehrenden Strahls (14a) durch Anzeige der Änderung der involvierten Gesamtstrahlbahnlänge;

- einen Reflektor (RF3) zum Reflektieren des Strahls (14a); und

- wobei eines von dem Reflektor (RF3) und der Strahlvorrichtung (13) an einem Körper, der entlang einer vorgegebenen Bahn zu bewegen ist, montiert wird, und das andere desselben an einem relativ stationären Punkt montiert wird, wobei der Reflektor (RF3) dazu eingerichtet ist, den Strahl (14a) zu dem ersten Punkt der Strahlvorrichtung (13) zurückzusenden, und von einer Größe ist, dass der Reflektor (RF3) den Strahl (14a) selbst dann so reflektiert, wenn der Körper in einer Bahn, die nicht parallel zu der Strahlrichtung ist, bewegt wird,

**dadurch gekennzeichnet, dass** der Reflektor (RF3) eine plane reflektierende Fläche ist, gegen die der Strahl (14a) in rechten Winkeln geleitet wird, und **dadurch**, dass der Strahl (14a) ein divergenter Strahl ist.

**13.** Vorrichtung nach Anspruch 12, **dadurch gekennzeichnet, dass** sie die Messungen in einem vorgegebenen dreidimensionalen Raum mit drei orthogonalen Achsen (X, Y, Z) und vier gegenüberliegenden Diagonalen (r, r') durchführt und Einrichtungen bereitgestellt werden, um alle der Schritte für wenigstens zwei mehr der gegenüberliegenden Diagonalen (r, r') zu wiederholen, um Körperbewegungsfehlerkomponenten basierend auf allen der genommenen Messungen zu berechnen.

**14.** Vorrichtung nach Anspruch 12 oder 13, **dadurch gekennzeichnet, dass** sie Einrichtungen enthält, um aus den Körperbewegungsfehlerkomponenten eine Ausgleichstabelle (10c) zu erzeugen, die, wenn sie in den Rechner (11), der die Körperbewegung in der normalen Betriebssteuerung der Bewegung des Körpers steuern soll, heruntergeladen wird, die Bewegungsfehler durch Ausgleich der Bewegungsfehler verringert.

**15.** Vorrichtung nach Anspruch 13 oder 14, **dadurch gekennzeichnet, dass** sie ein Körperpositionierungsmotor-Steuersystem zum Bewegen eines Körpers entlang der orthogonalen Achsen in einem volumetrischen Raum umfasst, wobei das System Folgendes umfasst:

- X-, Y- und Z-Achsen-Körperpositionierungsmotoren (12a, 12b, 12c);

- eine Steuerung (10b, 10b') mit X-, Y- und Z-Achsen-Motoraktivierungssignalausgängen zum Erzeugen eines variablen Ausgangs zum Aktivieren der jeweiligen Motoren (12a, 12b, 12c) in unterschiedlichen Graden in Abhängigkeit von dem Wert der Ausgangssignalvariablen; und

- einen CAD/CAM-gesteuerten Rechner (11) zum Erzeugen idealer Steuersignale für die Steuerung (10b, 10b'), die daraus die Motoraktivierungssignale entwickelt;

- eine Fehlerausgleichsdatei, die Tabellen (10c) enthält, die die Körperbewegungsfehlerkomponenten angeben;

- Steuerungsausgangssignal-Änderungseinrichtungen zum Umwandeln der Körperbewegungsfehlerkomponenten der Datei zu Steuerungsausgangs-Änderungssignalen, die die Motoren (12a, 12b, 12c) so aktivieren, dass die Körperbewegungsfehler so korrigiert werden, dass der Körper tatsächlich entlang der gewünschten Bahnen, die von dem CAD/CAM-gesteuerten Rechnerausgang gefordert werden, bewegt wird, wobei die Steuerungsausgangssignal-Änderungseinrichtungen Korrektur-Interpolatorsoftware-Einrichtungen (11c) sind, die auf den Fehler in der Ausgleichsdatei (10c) reagieren, um den Signalausgang des CAD/CAM-gesteuerten Rechners (11), der in die Steuerung (10b, 10b') gespeist wird, so zu ändern, dass Steuerungsausgangssignale den Körper so in der gewünschten Bahn bewegen, dass die Körperbewegungsfehlerkorrektur erreicht wird, ohne dass eine bereits bestehende Steuerung verändert werden muss.

16. Vorrichtung nach einem der Ansprüche 12 bis 15, **dadurch gekennzeichnet, dass** die Strahlleiteinrichtung (13') und die Reflektoreinrichtung ein Doppelapertur-Distanzmesssystem bilden, bei dem die Strahlleiteinrichtung (13") einen Strahl (14a') von einer ersten Apertur davon in eine vorgegebene Richtung leitet und das System auf eine Änderung bei einem Merkmal des Strahls (14d'), der zu einer zweiten Apertur davon zurückkehrt, durch Anzeigen der Änderung der involvierten Gesamt-Strahlbahnlänge reagiert, und die Reflektoreinrichtung eine Reihe von Reflektoren umfasst, um den von der ersten Apertur ausgesendeten Strahl zu reflektieren, um den Strahl zu einer zweiten Apertur des Messsystems zurückzusenden, wobei einer der Reflektoren ein erster Planspiegel (RF3) ist, ein anderer der Reflektoren ein Strahlteiler (18) zum letztlichen Leiten des Strahls zu der zweiten Apertur ist und ein anderer ein Reflektor (20) ist, der den Strahl zu der zweiten Apertur leitet, wobei eines von dem ersten Planspiegel (RF3) und der Strahlleiteinrichtung (13') mit den anderen Reflektoren (18, 20) an dem Körper montiert wird, um entlang einer vorgegebenen Bahn bewegt zu werden und das andere desselben an einem relativ stationären Punkt montiert wird, wobei der Planspiegel (RF3) in rechten Winkeln zu der Richtung ausgerichtet ist, in der der divergierende Strahl von der ersten Apertur geleitet wird, um den Strahl in die Richtung der ersten Apertur zurückzusenden, wobei sich der Strahlteiler (18) in der Bahn des von der ersten Apertur ausgesendeten Strahls (14a') befindet, um zu ermöglichen, dass ein Teil davon den ersten Planspiegel (RF3) erreicht, der den von ihm reflektierten Strahl zu dem Strahlteiler (18) zurücksendet, der dann einen Teil des ersten reflektierten Strahls (14b') in eine unterschiedliche Richtung zu dem anderen Reflektor (20) hin leitet, der denselben zu der zweiten Apertur leitet; wobei der Planspiegel (RF3) von einer Größe ist, dass der Spiegel (RF3) den Strahl (14a') abfängt und zurück zu dem Strahlteiler (18) reflektiert und zwar selbst dann, wenn der Körper in einer nichtparallelen Bahn zu der Anfangsrichtung des Strahls (14a') bewegt wird.

17. Vorrichtung nach Anspruch 16, **dadurch gekennzeichnet, dass** der andere Reflektor (20) ein einzelner Planspiegel ist, der in einem Winkel geneigt ist, um den Strahl, der von dem Strahlteiler (18) dorthin geleitet wurde, zu der zweiten Apertur der Strahlleiteinrichtung (13') zurückzusenden.

18. Vorrichtung nach einem der Ansprüche 12 bis 17, **dadurch gekennzeichnet, dass** der eine Reflektor (RF3) ein Planspiegel ist, der dem entgegenkommenden Strahl (14a, 14a', 14a"), der von der Strahlleiteinrichtung (13) in rechten Winkeln dorthin geleitet wird, zugewendet ist, und die Strahlleiteinrichtung (13) dazu eingerichtet ist, einen divergierenden Strahl (14a, 14a', 14a") dorthin zu leiten.

19. Vorrichtung nach einem der Ansprüche 12 bis 18, **dadurch gekennzeichnet, dass** Einrichtungen bereitgestellt werden, um alle der Schritte für genügend gegenüberliegende Diagonale (r, r') und unterschiedliche der möglichen sechs unterschiedlichen Körperbewegungsfolgen zu wiederholen, wenn dies erforderlich ist, um genügend Körperbewegungsfehlerkomponenten zu sammeln, um wenigstens die Linear-, Geradheits- und Rechtwinkligkeitsfehlerkomponenten relativ zu jeder Achse zu berechnen, dann wenigstens die Linear- und Geradheitsfehlerkomponenten relativ zu jeder Achse zu berechnen und Ausgleichstabellen (10c) von diesen Körperbewegungsfehlerberechnungen anzulegen, die dazu verwendet werden können, X-, Y- und Z-Achsen-Motorsteuersignale zu erzeugen, die in den Rechner (11), der den Körper steuert, gespeist werden, um die Körperpositionsgenauigkeit zu verbessern.

**Revendications**

1.  Procédé servant à mesurer l'erreur de position d'un corps déplacé dans un appareil de mesure de corps lequel dirige un faisceau d'énergie réfléchissable (14a) à partir de celui-ci dans une direction donnée, et un réflecteur (RF3), qui est destiné à réfléchir ledit faisceau (14a) pour le renvoyer vers ledit appareil afin d'obtenir des mesures d'erreur de position dudit corps devant être déplacé, en vertu d'une commande d'ordinateur, suivant des trajectoires qui comportent le long de celles-ci des points de mesure prédéterminés et qui ne sont pas parallèles à ladite direction du faisceau,
    ledit procédé comprenant les étapes suivantes :

    -   le positionnement de l'un desdits postes, à savoir ledit réflecteur (RF3) ou ledit appareil de mesure sur ledit corps, et le montage de l'autre poste au niveau d'un point stationnaire par rapport à celui-ci, de sorte qu'au fur et à mesure que ledit corps est déplacé par ledit ordinateur le long desdites trajectoires, ledit appareil de mesure va mesurer et enregistrer la distance entre ledit réflecteur (RF3) et l'appareil, ledit réflecteur (RF3) étant suffisamment grand pour intercepter ledit faisceau (14a) au niveau desdits points au fur et à mesure que ledit corps est ainsi déplacé ;

    -   un ordinateur (11) qui sert à contrôler ladite position du corps et qui est alors actionné afin de diriger le corps pour que ce dernier se déplace le long desdites trajectoires de sorte que ledit réflecteur intercepte et réfléchisse le faisceau d'énergie (14a) pour le renvoyer audit appareil afin de donner les mesures de position effectives du réflecteur au fur et à mesure que ledit corps est censé atteindre lesdits points prédéterminés, du fait que les distances idéales entre ledit réflecteur et l'appareil sont enregistrées dans une mémoire si ledit ordinateur (11) avait dirigé, de façon idéale, ledit corps vers lesdits points de mesure prédéterminés ;

    -   l'utilisation dudit appareil de mesure afin de déterminer et d'enregistrer les positions effectives dudit corps, au niveau desdits points de mesure le long desdites trajectoires, en mesurant d'abord et en enregistrant lors de la même opération les positions effectives dudit réflecteur (RF3) le long de la direction suivant laquelle ledit faisceau (14a) est dirigé, en comparant lesdites mesures auxdites distances de réflecteur idéales enregistrées afin de déterminer les erreurs de mesure de distance du réflecteur lorsque le corps se trouve au niveau dudit point de mesure, et ensuite en calculant et en enregistrant, sur la base de chaque erreur de mesure de distance du réflecteur, les composants d'erreur de mouvement du corps quand ledit corps se trouvait au niveau desdits points de mesure,

    **caractérisé en ce qu'**une surface réfléchissante plane, contre laquelle le faisceau (14a) est dirigé à angles droits, est utilisée en tant que ledit réflecteur (RF3), et **en ce que** le faisceau (14a) est un faisceau divergent.

2.  Procédé, selon la revendication 1, **caractérisé en ce que** les mesures sont réalisées dans un espace tridimensionnel donné ayant trois axes orthogonaux (X, Y, Z) et quatre diagonales opposées (r, r').

3.  Procédé, selon la revendication 2, **caractérisé en ce que** toutes lesdites étapes sont répétées pour au moins deux de plus jusqu'à la totalité desdites quatre diagonales opposées (r, r') dudit espace afin de calculer les composants d'erreur de mouvement du corps sur la base de toutes les mesures ayant été effectuées.

4.  Procédé, selon l'une quelconque des revendications précédentes, **caractérisé en ce qu'**un moyen de direction de faisceau (13) dirige ledit faisceau d'énergie divergent vers ladite surface réfléchissante plane (RF3).

5.  Procédé, selon la revendication 2, **caractérisé en ce que** ledit procédé inclut les étapes consistant à :

    -   diriger ledit faisceau (14a) provenant dudit moyen de direction de faisceau (13) le long d'une diagonale sélectionnée parmi lesdites diagonales (r, r') ;

    -   actionner ledit ordinateur (11) afin de déplacer ledit corps entre les extrémités de ladite une diagonale (r, r') dans ledit espace, ledit mouvement entre les extrémités de ladite une diagonale (r, r') se faisant selon des groupes répétés identiques de séquences de mouvements incrémentiels et séquentiels à l'opposé des divers segments (S1 à S5) de ladite diagonale sélectionnée (r, r'), de sorte que la première étape de chaque groupe, en l'absence de toute erreur de mouvement, commence à l'une des extrémités d'un segment (S1 à S5) et continue en parallèle à l'un des axes orthogonaux dudit espace et se termine au niveau d'un premier point de mesure, la deuxième étape de chaque groupe se déroule ensuite en parallèle à un deuxième desdits axes et se termine au niveau d'un deuxième point de mesure et la dernière étape de chaque groupe se déroule en parallèle à l'autre desdits axes et se termine au niveau d'un point de mesure désiré et donné lequel, en l'absence de toute erreur de position, se situerait à l'extrémité du segment diagonal (S1 à S5) en question, ledit un réflecteur (RF3) interceptant alors le faisceau dirigé le long de ladite diagonale sélectionnée (r, r') même si le corps n'est pas déplacé parallèlement à la direction du faisceau ;

- mesurer, à l'aide dudit appareil, les distances de réflecteur effectives, qui représentent les distances entre ledit un réflecteur (RF3) et ledit moyen de direction de faisceau (13) le long de la diagonale sélectionnée (r, r') lorsque le corps est déplacé vers lesdits points de mesure respectifs au niveau des extrémités de chacun desdits mouvements incrémentiels ; et

- calculer les composants d'erreur de mouvement du corps, à partir des données fondées sur lesdites distances de réflecteur effectives et des distances de position idéales du corps.

6. Procédé, selon la revendication 5, **caractérisé en ce qu'**il est répété pour chacune desdites séquences de mouvement d'axe afin de tenir compte des composants d'erreur de mouvement du corps en termes de jeu.

7. Procédé, selon la revendication 5, **caractérisé en ce que** les tables de compensation d'erreur (10c) sont préparées à partir des calculs d'erreur de mouvement du corps et lesdites tables de compensation (10c) sont utilisées pour corriger le mouvement dudit corps grâce à l'ordinateur (11) en question.

8. Procédé, selon la revendication 7, **caractérisé en ce qu'**il collecte au moins trois ensembles de données pour les mouvements du corps par rapport à au moins 3 diagonales opposées (r, r'), opération suivie des étapes consistant à calculer au moins 3 erreurs de déplacement et 6 erreurs de rectilignité par rapport auxdits axes qui sont incorporés auxdites tables de compensation (10c) de sorte que le mouvement dudit corps par ledit ordinateur (11) soit effectué de façon plus précise.

9. Procédé, selon la revendication 5, **caractérisé en ce que** toutes lesdites étapes sont répétées pour un nombre suffisant de diagonales opposées (r, r') et de différentes séquences parmi les six différentes séquences de mouvement de corps possibles, si besoin est, pour collecter un nombre suffisant de composants d'erreur de mouvement du corps dans le but de calculer au moins les composants d'erreur de linéarité, de rectilignité et de perpendicularité par rapport à chaque axe, puis calculer au moins lesdits composants d'erreur de linéarité et de rectilignité par rapport à chaque axe, et préparer des tables de compensation (10c) à partir desdits calculs d'erreur de mouvement du corps lesquelles peuvent être utilisées pour générer des signaux de commande de moteur pour les axes X, Y et Z qui sont acheminés à l'ordinateur (11) chargé de contrôler ledit corps afin d'améliorer la précision de la position du corps.

10. Procédé, selon la revendication 5, **caractérisé en ce qu'**il est répété pour un nombre suffisant de diagonales opposées (r, r') et/ou de différentes séquences parmi les six différentes séquences de mouvement de corps possibles, pour calculer les composants d'erreur de mouvement du corps qui incluent les composants d'erreur de perpendicularité, de tangage, de lacet et de roulis par rapport à chaque axe, et ensuite calculer et enregistrer dans ladite table de compensation (10c) au moins lesdits composants d'erreur de perpendicularité, de tangage, de lacet et de roulis par rapport à chaque axe.

11. Procédé, selon la revendication 5, **caractérisé en ce qu'**il est répété pour un nombre suffisant de diagonales opposées (r, r') et/ou de différentes séquences parmi les six différentes séquences de mouvement de corps possibles, pour calculer un composant d'erreur de corps non-rigide, et ensuite calculer et enregistrer dans ladite table de compensation (10c) ledit composant d'erreur de corps non-rigide.

12. Appareil servant à mesurer l'erreur de position de corps pour un corps en déplacement, comprenant :

- un appareil à faisceau (13) permettant de diriger un faisceau d'énergie (14a) suivant une direction donnée à partir d'un premier point et réagissant au changement d'une caractéristique du faisceau (14a) qui revient vers ledit point, en indiquant le changement dans la longueur globale de la trajectoire du faisceau en question ;

- un réflecteur (RF3) servant à réfléchir ledit faisceau (14a) ; et

- l'un desdits postes, à savoir ledit réflecteur (RF3) ou ledit appareil à faisceau (13) est monté sur un corps destiné à être déplacé le long d'une trajectoire donnée, alors que l'autre poste est monté au niveau d'un point relativement stationnaire, ledit réflecteur (RF3) étant adapté de façon à renvoyer le faisceau (14a) vers ledit premier point dudit appareil à faisceau (13) et ayant une taille telle que le réflecteur (RF3) réfléchisse ainsi ledit faisceau (14a) même si le corps est déplacé suivant une trajectoire qui n'est pas parallèle à ladite direction de faisceau,

**caractérisé en ce que** ledit réflecteur (RF3) est une surface réfléchissante plane contre laquelle le faisceau (14a) est dirigé à angles droits, et **en ce que** le faisceau (14a) est un faisceau divergent.

13. Appareil, selon la revendication 12, **caractérisé en ce qu'**il effectue les mesures dans un espace tridimensionnel donné ayant trois axes orthogonaux (X, Y, Z) et quatre diagonales opposées (r, r') et des moyens sont prévus pour répéter la totalité desdites étapes pour au moins deux de plus desdites diagonales opposées (r, r') afin de calculer les composants d'erreur de mouvement du corps sur la base de toutes les mesures ayant été effectuées.

14. Appareil, selon la revendication 12 ou 13, **caractérisé en ce qu'**il comporte des moyens servant à générer, à partir desdits composants d'erreur de mouvement du corps, une table de compensation (10c) qui, lorsqu'elle est téléchargée dans l'ordinateur (11) destiné à contrôler le mouvement du corps suivant le contrôle opérationnel normal du mouvement dudit corps, va réduire les erreurs en termes de mouvement en assurant la compensation desdites erreurs de mouvement.

15. Appareil, selon la revendication 13 ou 14, **caractérisé en ce qu'**il comporte un système de contrôle de moteur du positionnement du corps destiné à déplacer un corps le long desdits axes orthogonaux dans un espace volumétrique, ledit système incluant :

- des moteurs de positionnement du corps (12a, 12b, 12c) sur les axes X, Y et Z ;

- un contrôleur (10b, 10b') avec des sorties de signaux d'excitation des moteurs pour les axes X, Y et Z afin de générer une sortie variable servant à exciter les moteurs respectifs (12a, 12b, 12c) suivant des degrés variables en fonction de la valeur de la variable du signal de sortie ; et

- un ordinateur piloté CAD/CAM (11) servant à générer des signaux de contrôle idéaux pour le contrôleur (10b, 10b'), lequel développe à partir de ceux-ci lesdits signaux d'excitation du moteur ;

- un fichier de compensation d'erreurs lequel contient des tables (10c) indiquant les composants d'erreur de mouvement du corps ;

- des moyens de modification des signaux de sortie du contrôleur servant à convertir lesdits composants d'erreur de mouvement du corps dudit fichier en signaux de modification de sortie du contrôleur lesquels excitent lesdits moteurs (12a, 12b, 12c) d'une manière qui va corriger lesdites erreurs de mouvement du corps de sorte que le corps soit effectivement déplacé le long des trajectoires désirées qui sont sollicitées par la sortie de l'ordinateur piloté CAD/CAM, lesdits moyens de modification des signaux de sortie du contrôleur étant des moyens logiciels interpolateurs de correction (11c) sensibles à l'erreur dans ledit fichier de compensation (10c) afin de modifier la sortie de signal dudit ordinateur piloté CAD/CAM (11) acheminée au contrôleur (10b, 10b'), de sorte que les signaux de sortie du contrôleur déplacent le corps suivant la trajectoire désirée de sorte que la correction de l'erreur de mouvement du corps est obtenue sans qu'il soit nécessaire de modifier un contrôleur pré-existant.

16. Appareil, selon l'une quelconque des revendications 12 à 15, **caractérisé en ce que** ledit moyen de direction de faisceau (13') et le moyen réflecteur constituent un système de mesure de distance à double ouverture, dans lequel ledit moyen de direction de faisceau (13") dirige un faisceau (14a') suivant une direction donnée à partir d'une première ouverture de celui-ci, et le système réagit au changement se produisant dans une caractéristique du faisceau (14d'), lequel revient à une deuxième ouverture de celui-ci, en indiquant le changement dans la longueur globale de la trajectoire du faisceau en question, et ledit moyen réflecteur inclut une série de réflecteurs servant à réfléchir ledit faisceau émanant de ladite première ouverture afin de faire revenir le faisceau vers une deuxième ouverture dudit système de mesure, l'un desdits réflecteurs étant un premier miroir plan (RF3), un autre desdits réflecteurs étant un répartiteur de faisceau (18) afin de diriger en fin de compte le faisceau vers ladite deuxième ouverture et un autre étant un réflecteur (20) qui dirige le faisceau vers ladite deuxième ouverture, alors que l'un desdits postes, à savoir ledit premier miroir plan (RF3) ou ledit moyen de direction de faisceau (13') avec les autres réflecteurs (18, 20), est monté sur ledit corps destiné à être déplacé le long d'une trajectoire donnée, et l'autre desdits postes est monté au niveau d'un point relativement stationnaire, ledit miroir plan (RF3) étant orienté à angles droits par rapport à la direction suivant laquelle ledit faisceau divergent est dirigé à partir de ladite première ouverture pour faire revenir le faisceau dans la direction de ladite première ouverture, ledit répartiteur de faisceau (18) étant situé dans la trajectoire du faisceau (14a') qui est émis à partir de ladite première ouverture afin de permettre à une partie de celui-ci d'atteindre ledit premier miroir plan (RF3) lequel renvoie le faisceau qu'il réfléchit vers ledit répartiteur de faisceau (18) lequel dirige ensuite une partie du premier faisceau réfléchi (14b') suivant une direction différente vers ledit autre réflecteur (20) qui dirige celle-ci vers ladite deuxième ouverture ; ledit miroir plan (RF3) ayant une taille telle que le miroir (RF3) intercepte ledit faisceau (14a') et le renvoie par réflexion vers ledit répartiteur de faisceau (18) même si le corps est déplacé suivant une trajectoire qui n'est pas parallèle à ladite direction initiale du faisceau (14a').

**17.** Appareil, selon la revendication 16, **caractérisé en ce que** ledit autre réflecteur (20) est un seul miroir plan qui est incliné à un certain angle afin de renvoyer le faisceau, qui y est dirigé à partir dudit répartiteur de faisceau (18), vers ladite deuxième ouverture dudit moyen de direction de faisceau (13').

**18.** Appareil, selon l'une quelconque des revendications 12 à 17, **caractérisé en ce que** ledit un réflecteur (RF3) est un miroir plan qui fait face au faisceau arrivant (14a, 14a', 14a''), qui y est dirigé à angles droits à partir dudit moyen de direction de faisceau (13), et ledit moyen de direction de faisceau (13) étant adapté de façon à diriger un faisceau divergent (14a, 14a', 14a'') sur celui-ci.

**19.** Appareil, selon l'une quelconque des revendications 12 à 18, **caractérisé en ce que** des moyens sont prévus pour répéter toutes lesdites étapes pour un nombre suffisant de diagonales opposées (r, r') et de différentes séquences parmi les six différentes séquences de mouvement de corps possibles, si besoin est, pour collecter un nombre suffisant de composants d'erreur de mouvement du corps dans le but de calculer au moins les composants d'erreur de linéarité, de rectilignité et de perpendicularité par rapport à chaque axe, puis calculer au moins lesdits composants d'erreur de linéarité et de rectilignité par rapport à chaque axe, et préparer des tables de compensation (10c) à partir desdits calculs d'erreur de mouvement du corps lesquelles peuvent être utilisées pour générer des signaux de commande de moteur pour les axes X, Y et Z qui sont acheminés à l'ordinateur (11) chargé de contrôler ledit corps afin d'améliorer la précision de la position du corps.

# FIG. 1

Y

P

θ

φ

(0, 0, 0)

X

Z

# FIG. 2

Y

S1 S2 S3 S4 S5

r

θ

φ

(0, 0, 0)

X

Z

# FIG. 3

12a

X-AXIS MOTOR

12b

X-AXIS MOTOR

12c

X-AXIS MOTOR

10

MOTOR
CONTROLLER

26

FIG. 4a

FIG. 4b

FIG. 4c

# FIG. 5a

# FIG. 5b

# FIG. 5C

# FIG. 6

# FIG. 7

# FIG. 8a

A-1

ALONG X-AXIS

A-1'

STOP & TAKE DATA

B-1

PARALLEL TO Y-AXIS

B-1'

STOP & TAKE DATA

C-1

PARALLEL TO Z-AXIS

C-1'

STOP & TAKE DATA

D-1

ALONG X-AXIS

• • •

O-1

PARALLEL TO Z-AXIS

O-1'

STOP & TAKE DATA

P-1

COMPUTE AND RECORD

# FIG. 8b

C-2

ALONG Z-AXIS

C-2'

STOP & TAKE DATA

A-2

PARALLEL TO X-AXIS

A-2'

STOP & TAKE DATA

B-2

PARALLEL TO Y-AXIS

B-2'

STOP & TAKE DATA

F-2

ALONG Z-AXIS

• • •

O-2

PARALLEL TO Z-AXIS

O-2'

STOP & TAKE DATA

P-2

COMPUTE AND RECORD

# FIG. 9a

# FIG. 9b

# FIG. 10a

# FIG. 10b

# FIG. 10c

## FIG. 11a

## FIG. 11b

## FIG. 12